# EUROPEAN PATENT APPLICATION

(11) **EP 4 811 892 A2**
(43) Date of publication of application: **23.09.2026**
(21) Application number: 26196493.6
(22) Date of filing: 12.02.2021
(51) Int. Cl.: H04W 60/00

(54) **METHODS AND APPARATUSES FOR CONTROLLING MULTI-USIM BEHAVIOUR OF USER EQUIPMENT**

(62) Document number(s) of the earlier application(s) in accordance with Art. 76 EPC: 21705930.2 / 4 292 349
(71) Applicant: Nokia Technologies Oy, 02610 Espoo (FI)
(72) Inventor: CASATI, Alessio, Surrey, KT8 1NT (GB)
(74) Representative: Page White Farrer

(57) **Abstract**

A user equipment (UE), comprising at least one processor, and at least one memory storing instructions that when executed by the at least one processor, cause the UE at least to perform: sending, to a first network, a message comprising an indication that the UE supports a multi universal subscriber identity module, USIM, mode; receiving, from the first network, a message comprising an indication that the first network supports paging filtering based on paging filtering information from the UE and that the paging filtering is preferred by the first network; in response to receiving the indication that the first network supports the paging filtering based on the paging filtering information from the UE and that the paging filtering is preferred by the first network, deciding to send the paging filtering information to the first network to command the first network to apply the paging filtering, based at least on the UE being configured to support the paging filtering and one or more state capabilities of the UE; and sending, to the first network, a message comprising the paging filtering information to command the first network to apply the paging filtering.

## Description

### FIELD

The subject disclosure generally relates to wireless communication systems and more particularly, to wireless communication systems controlling Multi-USIM behaviour of user equipment (UE). Yet more particularly, the subject disclosure provides methods and apparatuses for controlling Multi-USIM behaviour of UEs. The subject disclosure also provides methods and apparatuses for controlling paging filtering behaviour of UEs.

### BACKGROUND

In Rel-17, considerations have been made for explicitly supporting devices with Multi Universal Subscriber Identity Modules (Multi-USIM, MUSIM), i.e., devices that support more than one active USIM. One of the possible enhancements is that the cause code of paging can be indicated to the UE, and the UE can decide whether to accept the paging or not based on the cause code. Another enhancement is that the UE indicates to services of the network that the UE is currently not interested to receive paging about these services.

However, the enhancements suffer from several problems. For example, a problem exists in that the behaviour of the UE is not network controlled. So, even if the UE is supporting the paging filtering and also the network supports the paging filtering, the UE may not use it or use it at its own discretion if it detects the network supports the paging cause code. The network operator may end up deploying a feature that is in the hands of the vendors of UEs to decide when and how to use. The subject disclosure provides a solution to that problem. On the other hand, an operator may deploy both features as the vendors of UEs may support both features or just one of them so the UE cannot determine that only one of these features is to be used unless assisted by the network. Another problem to be solved is to control the paging behaviour of the UE when the UE supports both the paging filtering and the paging cause code the network supports. The subject disclosure also provides a solution to that problem.

### SUMMARY

According to a first aspect of the subject disclosure, a method to be performed by a user equipment (UE) is provided. The method of the first aspect is to control Multi-USIM behaviour of UEs. The method comprises: sending, to a network, an indication that the UE supports a multi USIM mode; receiving, from the network, an indication that the network supports both paging filtering based on paging filtering information from the UE and providing a paging cause code in a paging message to the UE; and in response to receiving the indication from the network, deciding whether to provide the paging filtering information to the network to command the network to apply the paging filtering, or to apply paging response behaviour based on a paging cause code in a paging message received from the network.

In some embodiments of the method, deciding is based on whether the UE supports at least one of providing the paging filtering information to the network and applying the paging response behaviour based on a paging cause code in a paging message received from the network.

In some embodiments of the method, if the UE supports both providing the paging filtering information to the network and applying the paging response behaviour based on a paging cause code in a paging message received from the network, deciding whether to provide the paging filtering information or to apply paging response behaviour based on a paging cause code in a paging message received from the network is based on a default behaviour such as a behavior defined in the standards.

In some embodiments, the method further comprises receiving, from the network, a preference indication indicating that one of paging filtering or paging response behaviour based on a paging cause code in a paging message received from the network is preferred by the network, wherein deciding whether to provide the paging filtering information or to apply paging response behaviour based on a paging cause code in a paging message received from the network is based on the preference indication.

In some embodiments, the method further comprises: receiving, from the network, a preference indication indicating that paging filtering is preferred by the network; in response to receiving the preference indication, deciding to provide the paging filtering information if the UE supports at least providing the paging filtering information; and providing, to the network, the paging filtering information to command the network to apply the paging filtering.

In some embodiments, the method further comprises deciding to apply the paging response behaviour based on a paging cause code in a paging message received from the network if the UE supports applying the paging response behaviour based on a paging cause code in a paging message received from the network only; receiving, from the network, a paging cause code in a paging message; and applying the paging response behaviour based on the paging cause code received in the paging message.

In some embodiments, the method further comprises: receiving, from the network, a preference indication indicating that providing a paging cause code in a paging message is preferred by the network; in response to receiving the preference indication, deciding to apply the paging response behaviour based on a paging cause code in a paging message received from the network if the UE supports at least applying the paging response behaviour based on a paging cause code in a paging message received from the network; receiving, from the network, a paging cause code in a paging message; and applying the paging response behaviour based on the paging cause code received in the paging message.

In some embodiments, the method further comprises: deciding to provide the paging filtering information if the UE supports providing the paging filtering information only; and providing, to the network, the paging filtering information to command the network to apply the paging filtering.

In some embodiments of the method, the indication sent to the network indicates that the UE is in the multi USIM mode of operation or that the UE supports at least one of the paging filtering and the paging response behaviour based on a paging cause code in a paging message received from the network.

In some embodiments of the method, if the UE supports both providing the paging filtering information and applying the paging response behaviour based on a paging cause code in a paging message received from the network, the indication sent to the network further indicates that the UE supports both providing the paging filtering information and applying the paging response behaviour based on a paging cause code in a paging message received from the network.

In some embodiments, the method further comprises sending, to the network, a message including the indication that the UE supports the multi USIM mode.

In some embodiments of the method, the message sent to the network is a registration request message.

In some embodiments, the method further comprises receiving, from the network, a message including the indication that the network supports both paging filtering based on paging filtering information from the UE and providing a paging cause code in a paging message to the UE.

In some embodiments of the method, the message received from the network is a registration accept message.

In some embodiments of the method, in response to deciding to provide the paging filtering information, the paging filtering information is provided to the network if the UE is unable to attend at least in part one or more services with the network, if the UE is leaving the network and/or if the UE is busy when receiving a paging message from the network.

In some embodiments, the method further comprises, in response to deciding to provide the paging filtering information, sending, to the network, a message including the paging filtering information.

In some embodiments of the method, the message is a registration request message or a service request message.

In some embodiments of the method, the message further comprises a busy indication or a leave indication.

In some embodiments, the method further comprises, in response to sending the message including the paging filtering, receiving, from the network, an accept message indicating that the network applies paging filtering.

In some embodiments of the method, the accept message is a registration accept message or a service accept message.

In some embodiments of the method, the indication that the network supports both paging filtering and providing a paging cause code comprises an indication that the network supports both paging filtering and providing a paging cause code for one or more services of the network.

In some embodiments of the method, in response to deciding to provide the paging filtering information, the paging filtering information is provided to the network if the UE determines that the paging filtering is applicable to one or more current state capabilities of the UE.

According to a second aspect of the subject disclosure, a method to be performed by a network is provided. The method of the second aspect is to control Multi-USIM behaviour of UEs. The method comprises: receiving, from a user equipment, UE, an indication that the UE supports a multi USIM mode; and sending, to the UE, an indication that the network supports both paging filtering based on paging filtering information from the UE and providing a paging cause code in a paging message to the UE, the indication commanding the UE to decide whether to provide the paging filtering information to the network to command the network to apply the paging filtering, or to apply paging response behaviour based on the paging cause code to be received in the paging message from the network.

In some embodiments, the method further comprises sending, to the UE, a preference indication indicating that one of paging filtering or paging response behaviour based on a paging cause code in a paging message received from the network is preferred by the network, the preference indication commanding the UE to decide whether to provide the paging filtering information or to apply paging response behaviour based on a paging cause code in a paging message received from the network based on the preference indication.

In some embodiments, the method further comprises: sending, to the UE, a preference indication indicating that paging filtering is preferred by the network, the preference indication commanding the UE to decide to provide the paging filtering information if the UE supports at least providing the paging filtering information; and receiving, from the UE, the paging filtering information to command the network to apply the paging filtering.

In some embodiments, the method further comprises sending, to the UE, a preference indication indicating that providing a paging cause code in a paging message is preferred by the network, the preference indication commanding the UE to decide to apply the paging response behaviour based on a paging cause code in a paging message received from the network if the UE supports at least applying the paging response behaviour based on a paging cause code in a paging message received from the network; and sending, to the UE, a paging cause code in a paging message.

In some embodiments of the method, the indication received from the UE indicates that the UE is in the multi USIM mode of operation or that the UE supports at least one of the paging filtering and the paging response behaviour based on a paging cause code in a paging message received from the network.

In some embodiments of the method, if the UE supports both providing the paging filtering information and applying the paging response behaviour based on a paging cause code in a paging message received from the network, the indication received from the UE further indicates that the UE supports both providing the paging filtering information and applying the paging response behaviour based on a paging cause code in a paging message received from the network.

In some embodiments of the method, the indication sent to the UE commanding the UE to decide based on a default behaviour such as a behavior defined in the standards.

In some embodiments, the method further comprises receiving, from the UE, a message including the indication that the UE supports the multi USIM mode.

In some embodiments of the method, the message received from the UE is a registration request message.

In some embodiments, the method further comprises determining whether to send the indication that the network supports both paging filtering based on paging filtering information from the UE and providing a paging cause code in a paging message to the UE based on a policy.

In some embodiments, the method further comprises sending, to the UE, a message including the indication that the network supports both paging filtering based on paging filtering information from the UE and providing a paging cause code in a paging message to the UE.

In some embodiments of the method, the message sent to the UE is a registration accept message.

In some embodiments of the method, the paging filtering information provided to the network indicates that the UE is unable to attend at least in part one or more services with the network, that the UE is leaving the network and/or that the UE is busy when receiving a paging message from the network.

In some embodiments, the method further comprises receiving, from the UE, a message including the paging filtering information.

In some embodiments of the method, the message is a registration request message or a service request message.

In some embodiments of the method, the message further comprises a busy indication or a leave indication.

In some embodiments, the method further comprises: applying paging filtering and preventing to trigger a downlink data notification to the UE; and sending, to the UE, an accept message indicating that the network applies paging filtering.

In some embodiments of the method, the accept message is a registration accept message or a service accept message.

In some embodiments of the method, the indication that the network supports both paging filtering and providing a paging cause code comprises an indication that the network supports both paging filtering and providing a paging cause code for one or more services of the network.

In some embodiments of the method, the network applies the paging filtering for the one or more services.

According to a third aspect of the subject disclosure, a user equipment (UE) in a network is provided. The UE of the third aspect is to control Multi-USIM behaviour of UEs. The UE comprises: at least one processor; and at least one memory including computer program code. The computer program code causes the UE, when executed with the at least one processor, to at least: send, to the network, an indication that the UE supports a multi universal subscriber identity module, USIM, mode; receive, from the network, an indication that the network supports both paging filtering based on paging filtering information from the UE and providing a paging cause code in a paging message to the UE; and in response to receiving the indication, decide whether to provide the paging filtering information to the network to command the network to apply the paging filtering, or to apply paging response behaviour based on a paging cause code in a paging message received from the network.

In some embodiments of the UE, the computer program code causes the UE to at least decide based on whether the UE supports at least one of providing the paging filtering information to the network and applying the paging response behaviour based on a paging cause code in a paging message received from the network.

In some embodiments of the UE, the computer program code causes the UE, if the UE supports both providing the paging filtering information to the network and applying the paging response behaviour based on a paging cause code in a paging message received from the network, to at least decide whether to provide the paging filtering information or to apply paging response behaviour based on a paging cause code in a paging message received from the network based on a default behavior such as a behavior defined in the standards.

In some embodiments of the UE, the computer program code causes the UE to at least receive, from the network, a preference indication indicating that one of paging filtering or paging response behaviour based on a paging cause code in a paging message received from the network is preferred by the network, wherein to decide whether to provide the paging filtering information or to apply paging response behaviour based on a paging cause code in a paging message received from the network is based on the preference indication.

In some embodiments of the UE, the computer program code causes the UE to at least receive, from the network, a preference indication indicating that paging filtering is preferred by the network; in response to receiving the preference indication, decide to provide the paging filtering information if the UE supports at least providing the paging filtering information; and provide, to the network, the paging filtering information to command the network to apply the paging filtering.

In some embodiments of the UE, the computer program code causes the UE to at least decide to apply the paging response behaviour based on a paging cause code in a paging message received from the network if the UE supports applying the paging response behaviour based on a paging cause code in a paging message received from the network only; receive, from the network, a paging cause code in a paging message; and apply the paging response behaviour based on the paging cause code received in the paging message.

In some embodiments of the UE, the computer program code causes the UE to at least receive, from the network, a preference indication indicating that providing the paging cause code in the paging message is preferred by the network; in response to receiving the preference indication, decide to apply the paging response behaviour based on a paging cause code in a paging message received from the network if the UE supports at least applying the paging response behaviour based on a paging cause code in a paging message received from the network; receive, from the network, a paging cause code in a paging message; and apply the paging response behaviour based on the paging cause code received in the paging message.

In some embodiments of the UE, the computer program code causes the UE to at least decide to provide the paging filtering information if the UE supports providing the paging filtering information only; and provide, to the network, the paging filtering information to command the network to apply the paging filtering.

In some embodiments of the UE, the indication sent to the network indicates that the UE is in the multi USIM mode of operation or that the UE supports at least one of the paging filtering and the paging response behaviour based on a paging cause code in a paging message received from the network.

In some embodiments of the UE, if the UE supports both providing the paging filtering information and applying the paging response behaviour based on a paging cause code in a paging message received from the network, the indication sent to the network further indicates that the UE supports both providing the paging filtering information and applying the paging response behaviour based on a paging cause code in a paging message received from the network.

In some embodiments of the UE, the computer program code causes the UE to at least send, to the network, a message including the indication that the UE supports the multi USIM mode.

In some embodiments of the UE, the message sent to the network is a registration request message.

In some embodiments of the UE, the computer program code causes the UE to at least receive, from the network, a message including the indication that the network supports both paging filtering based on paging filtering information from the UE and providing a paging cause code in a paging message to the UE.

In some embodiments of the UE, the message received from the network is a registration accept message.

In some embodiments of the UE, in response to deciding to provide the paging filtering information, the paging filtering information is provided to the network if the UE is unable to attend at least in part one or more services with the network, if the UE is leaving the network and/or if the UE is busy when receiving a paging message from the network.

In some embodiments of the UE, the computer program code causes the UE to at least, in response to deciding to provide the paging filtering information, send, to the network, a message including the paging filtering information.

In some embodiments of the UE, the message is a registration request message or a service request message.

In some embodiments of the UE, the message further comprises a busy indication or a leave indication.

In some embodiments of the UE, the computer program code causes the UE to at least, in response to sending the message including the paging filtering, receive, from the network, an accept message indicating that the network applies paging filtering.

In some embodiments of the UE, the accept message is a registration accept message or a service accept message.

In some embodiments of the UE, the indication that the network supports both paging filtering and providing a paging cause code comprises an indication that the network supports both paging filtering and providing a paging cause code for one or more services of the network.

In some embodiments of the UE, in response to deciding to provide the paging filtering information, the paging filtering information is provided to the network if the UE determines that the paging filtering is applicable to one or more current state capabilities of the UE.

According to a fourth aspect of the subject disclosure, a base station in a network is provided. The base station of the fourth aspect is to control Multi-USIM behaviour of UEs. The base station comprises at least one processor; and at least one memory including computer program code. The computer program code causes the base station, when executed with the at least one processor, to at least: receive, from a UE an indication that the UE supports a multi USIM mode; and send, to the UE, an indication that the network supports both paging filtering based on paging filtering information from the UE and providing a paging cause code in a paging message to the UE, the indication commanding the UE to decide whether to provide the paging filtering information to the network to command the network to apply the paging filtering, or to apply paging response behaviour based on a paging cause code to be received in a paging message from the network.

In some embodiments of the base station, the computer program code causes the base station to at least send, to the UE, a preference indication indicating that one of paging filtering or paging response behaviour based on a paging cause code in a paging message received from the network is preferred by the network, the preference indication commanding the UE to decide whether to provide the paging filtering information or to apply paging response behaviour based on a paging cause code in a paging message received from the network is based on the preference indication.

In some embodiments of the base station, the computer program code causes the base station to at least send, to the UE, a preference indication indicating that paging filtering is preferred by the network, the preference indication commanding the UE to decide to provide the paging filtering information if the UE supports at least providing the paging filtering information; and receive, from the UE, the paging filtering information to command the network to apply the paging filtering.

In some embodiments of the base station, the computer program code causes the base station to at least send, to the UE, a preference indication indicating that providing a paging cause code in a paging message is preferred by the network, the preference indication commanding the UE to decide to apply the paging response behaviour based on a paging cause code in a paging message received from the network if the UE supports at least applying the paging response behaviour based on a paging cause code in a paging message received from the network; and send, to the UE, a paging cause code in a paging message.

In some embodiments of the base station, the indication received from the UE indicates that the UE is in the multi USIM mode of operation or that the UE supports at least one of the paging filtering and the paging response behaviour based on a paging cause code in a paging message received from the network.

In some embodiments of the base station, if the UE supports both providing the paging filtering information and applying the paging response behaviour based on a paging cause code in a paging message received from the network, the indication received from the UE further indicates that the UE supports both providing the paging filtering information and applying the paging response behaviour based on a paging cause code in a paging message received from the network.

In some embodiments of the base station, the indication sent to the UE commanding the UE to decide based on a default behaviour such as a behavior defined in the standards.

In some embodiments of the base station, the computer program code causes the base station to at least receive, from the UE, a message including the indication that the UE supports the multi USIM mode.

In some embodiments of the base station, the message received from the UE is a registration request message.

In some embodiments of the base station, the computer program code causes the base station to at least determine whether to send the indication that the network supports both paging filtering based on paging filtering information from the UE and providing a paging cause code in a paging message to the UE based on a policy.

In some embodiments of the base station, the computer program code causes the base station to at least send, to the UE, a message including the indication that the network supports both paging filtering based on paging filtering information from the UE and providing a paging cause code in a paging message to the UE.

In some embodiments of the base station, the message sent to the UE is a registration accept message.

In some embodiments of the base station, the paging filtering information provided to the network indicates that the UE is unable to attend at least in part one or more services with the network, that the UE is leaving the network and/or that the UE is busy when receiving a paging message from the network.

In some embodiments of the base station, the computer program code causes the base station to at least receive, from the UE, a message including the paging filtering information.

In some embodiments of the base station, the message is a registration request message or a service request message.

In some embodiments of the base station, the message further comprises a busy indication or a leave indication.

In some embodiments of the base station, the computer program code causes the base station to at least apply paging filtering and prevent to trigger a downlink data notification to the UE; and send, to the UE, an accept message indicating that the network applies paging filtering.

In some embodiments of the base station, the accept message is a registration accept message or a service accept message.

In some embodiments of the base station, the indication that the network supports both paging filtering and providing a paging cause code comprises an indication that the network supports both paging filtering and providing a paging cause code for one or more services of the network.

In some embodiments of the base station, the network applies the paging filtering for the one or more services.

According to a fifth aspect of the subject disclosure, there may be provided a method to be performed by a user equipment (UE). The method of the fifth aspect is to control paging filtering behaviour of UEs. The method comprises: sending, to a network, an indication that the UE supports a multi universal subscriber identity module (USIM) mode; receiving, from the network, an indication to command the UE to provide paging filtering information; and providing, to the network, paging filtering information to command the network to apply paging filtering.

In some embodiments of the method, the indication sent to the network indicates that the UE is in the multi USIM mode of operation or that the UE supports paging filtering.

In some embodiments, the method further comprises sending, to the network, a message including the indication that the UE supports the multi USIM mode.

In some embodiments of the method, the message sent to the network is a registration request message.

In some embodiments, the method further comprises receiving, from the network, a message including the indication to command the UE to provide paging filtering information.

In some embodiments of the method, the message received from the network is a registration accept message.

In some embodiments of the method, the paging filtering information is provided to the network if the UE is unable to attend at least in part one or more services with the network, if the UE is leaving the network and/or if the UE is busy when receiving a paging message from the network.

In some embodiments, the method further comprises sending, to the network, a message including the paging filtering information.

In some embodiments of the method, the message is a registration request message or a service request message.

In some embodiments of the method, the message further comprises a busy indication or a leave indication.

In some embodiments, the method further comprises, in response to sending the message including the paging filtering, receiving, from the network, an accept message indicating that the network applies paging filtering.

In some embodiments of the method, the accept message is a registration accept message or a service accept message.

In some embodiments of the method, the indication to command the UE to provide paging filtering information received from the network comprises an indication to command the UE to provide the paging filtering information for one or more services of the network.

In some embodiments of the method, the paging filtering information is provided to the network if the UE supports the paging filtering.

In some embodiments of the method, the paging filtering information is provided to the network if the UE determines that the paging filtering is applicable to one or more current state capabilities of the UE.

In some embodiments, the method further comprises, in response to not receiving, from the network, an indication to command the UE to provide paging filtering information, relying on a paging cause code from the network to decide on whether to attend to paging or not.

According to a sixth aspect of the subject disclosure, there may be provided a method to be performed by a network. The method of the sixth aspect is to control paging filtering behaviour of UEs. The method comprises: receiving, from a user equipment (UE), an indication that the UE supports a multi universal subscriber identity module (USIM) mode; sending, to the UE, an indication to command the UE to provide paging filtering information; and receiving, from the UE, paging filtering information to command the network to apply paging filtering.

In some embodiments of the method, the indication received from the UE indicates that the UE is in the multi USIM mode of operation or that the UE supports paging filtering.

In some embodiments of the method, the indication received from the UE indicates that the UE is unable to attend at least in part one or more services with the network.

In some embodiments, the method further comprises receiving, from the UE, a message including the indication that the UE supports the multi USIM mode.

In some embodiments of the method, the message received from the UE is a registration request message.

In some embodiments, the method further comprises determining whether to send the indication to command the UE to provide paging filtering information based on a policy.

In some embodiments, the method further comprises sending, to the UE, a message including the indication to command the UE to provide paging filtering information.

In some embodiments of the method, the message sent to the UE is a registration accept message.

In some embodiments of the method, the paging filtering information provided to the network indicates that the UE is unable to attend at least in part one or more services with the network, that the UE is leaving the network and/or that the UE is busy when receiving a paging message from the network.

In some embodiments, the method further comprises receiving, from the UE, a message including the paging filtering information.

In some embodiments of the method, the message is a registration request message or a service request message.

In some embodiments of the method, the message further comprises a busy indication or a leave indication.

In some embodiments, the method further comprises applying paging filtering and preventing to trigger a downlink data notification to the UE, and sending, to the UE, an accept message indicating that the network applies paging filtering.

In some embodiments of the method, the accept message is a registration accept message or a service accept message.

In some embodiments of the method, the indication to command the UE to provide paging filtering information sent to the UE comprises an indication to command the UE to provide the paging filtering information for one or more services of the network.

In some embodiments of the method, the network applies the paging filtering for the one or more services.

According to a seventh aspect of the subject disclosure, there may be provided a user equipment (UE) in a network. The UE of the seventh aspect is to control paging filtering behaviour of UEs. The UE comprises: at least one processor; and at least one memory including computer program code. The computer program code causes the UE, when executed with the at least one processor, to at least: send, to the network, an indication that the UE supports a multi universal subscriber identity module (USIM) mode; receive, from the network, an indication to command the UE to provide paging filtering information; and provide, to the network, paging filtering information to command the network to apply paging filtering.

In some embodiments of the UE, the indication sent to the network indicates that the UE is in the multi USIM mode of operation or that the UE supports paging filtering.

In some embodiments of the UE, the computer program code further causes the UE to at least send, to the network, a message including the indication that the UE supports the multi USIM mode.

In some embodiments of the UE, the message sent to the network is a registration request message.

In some embodiments of the UE, the computer program code further causes the UE to at least receive, from the network, a message including the indication to command the UE to provide paging filtering information.

In some embodiments of the UE, the message received from the network is a registration accept message.

In some embodiments of the UE, the paging filtering information is provided to the network if the UE is unable to attend at least in part one or more services with the network, if the UE is leaving the network and/or if the UE is busy when receiving a paging message from the network.

In some embodiments of the UE, the computer program code further causes the UE to at least send, to the network, a message including the paging filtering information.

In some embodiments of the UE, the message is a registration request message or a service request message.

In some embodiments of the UE, the message further comprises a busy indication or a leave indication.

In some embodiments of the UE, the computer program code further causes the UE to at least, in response to sending the message including the paging filtering, receive, from the network, an accept message indicating that the network applies paging filtering.

In some embodiments of the UE, the accept message is a registration accept message or a service accept message.

In some embodiments of the UE, the indication to command the UE to provide paging filtering information received from the network comprises an indication to command the UE to provide the paging filtering information for one or more services of the network.

In some embodiments of the UE, the paging filtering information is provided to the network if the UE supports the paging filtering.

In some embodiments of the UE, the paging filtering information is provided to the network if the UE determines that the paging filtering is applicable to one or more current state capabilities of the UE.

In some embodiments of the UE, the computer program code further causes the UE to at least, in response to not receiving, from the network, an indication to command the UE to provide paging filtering information, rely on a paging cause code from the network to decide on whether to attend to paging or not.

According to an eighth aspect of the subject disclosure, there may be provided a base station in a network. The base station of the eighth aspect is to control paging filtering behaviour of UEs. The base station comprises at least one processor; and at least one memory including computer program code. The computer program code causes the base station, when executed with the at least one processor, to at least: receive, from a user equipment (UE) an indication that the UE supports a multi universal subscriber identity module (USIM) mode; send, to the UE, an indication to command the UE to provide paging filtering information; and receive, from the UE, paging filtering information to command the network to apply paging filtering.

In some embodiments of the base station, the indication received from the UE indicates that the UE is in the multi USIM mode of operation or that the UE supports paging filtering.

In some embodiments of the base station, the indication received from the UE indicates that the UE is unable to attend at least in part one or more services with the network.

In some embodiments of the base station, the computer program code further causes the base station to at least receive, from the UE, a message including the indication that the UE supports the multi USIM mode.

In some embodiments of the base station, the message received from the UE is a registration request message.

In some embodiments of the base station, the computer program code further causes the base station to at least determine whether to send the indication to command the UE to provide paging filtering information based on a policy.

In some embodiments of the base station, the computer program code further causes the base station to at least send, to the UE, a message including the indication to command the UE to provide paging filtering information.

In some embodiments of the base station, the message sent to the UE is a registration accept message.

In some embodiments of the base station, the paging filtering information provided to the network indicates that the UE is unable to attend at least in part one or more services with the network, that the UE is leaving the network and/or that the UE is busy when receiving a paging message from the network.

In some embodiments of the base station, the computer program code further causes the base station to at least receive, from the UE, a message including the paging filtering information.

In some embodiments of the base station, the message is a registration request message or a service request message.

In some embodiments of the base station, the message further comprises a busy indication or a leave indication.

In some embodiments of the base station, the computer program code further causes the base station to at least apply paging filtering and prevent to trigger a downlink data notification to the UE, and send, to the UE, an accept message indicating that the network applies paging filtering.

In some embodiments of the base station, the accept message is a registration accept message or a service accept message.

In some embodiments of the base station, the indication to command the UE to provide paging filtering information sent to the UE comprises an indication to command the UE to provide the paging filtering information for one or more services of the network.

In some embodiments of the base station, the network applies the paging filtering for the one or more services.

According to a ninth aspect of the subject disclosure, a computer program product comprises program instructions stored on a computer readable medium to execute steps according to any one of the embodiments of the methods outlined above when said program is executed on a computer.

According to a tenth aspect there is provided a user equipment (UE), comprising at least one processor, and at least one memory storing instructions that when executed by the at least one processor, cause the UE at least to perform: sending, to a first network, a message comprising an indication that the UE supports a multi universal subscriber identity module, USIM, mode; receiving, from the first network, a message comprising an indication that the first network supports paging filtering based on paging filtering information from the UE and that the paging filtering is preferred by the first network; in response to receiving the indication that the first network supports the paging filtering based on the paging filtering information from the UE and that the paging filtering is preferred by the first network, deciding to send the paging filtering information to the first network to command the first network to apply the paging filtering, based at least on the UE being configured to support the paging filtering and one or more state capabilities of the UE; and sending, to the first network, a message comprising the paging filtering information to command the first network to apply the paging filtering.

In some embodiments, the instructions, when executed by the at least one processor, cause the UE at least to perform: deciding to send the paging filtering information to the first network to command the first network to apply the paging filtering, despite the UE being configured to apply a paging response behaviour based on a paging cause code in a paging message received from the first network.

In some embodiments, the instructions, when executed by the at least one processor, further cause the UE at least to perform: receiving, from a second network, a message comprising an indication that the second network supports providing a paging cause code in a paging message to the UE.

In some embodiments, the message comprising the indication that the first network supports the paging filtering based on the paging filtering information from the UE and that the paging filtering is preferred by the first network is a same message as the message comprising the indication that the second network supports providing the paging cause code in the paging message to the UE, wherein the first network is a same network as the second network.

In some embodiments, the message comprising the indication that the first network supports the paging filtering based on the paging filtering information from the UE and that the paging filtering is preferred by the first network is a different message from the message comprising the indication that the second network supports providing the paging cause code in the paging message to the UE, wherein the message comprising the indication that the second network supports providing the paging cause code in the paging message to the UE is received after the UE has left the first network, and wherein the first network is a different network from the second network.

In some embodiments, the message comprising the indication that the second network supports providing the paging cause code in the paging message to the UE further indicates that providing the paging cause code in the paging message is preferred by the second network.

In some embodiments, the message comprising the indication that the UE supports the multi USIM mode further indicates that the UE is in the multi USIM mode.

In some embodiments, the message comprising the indication that the UE supports the multi USIM mode further indicates that the UE supports at least one of the paging filtering or a paging response behaviour based on a paging cause code in a paging message received from the first network.

In some embodiments, the message comprising the indication that the UE supports the multi USIM mode is a same message as the message comprising the paging filtering information to command the first network to apply the paging filtering.

In some embodiments, the message comprising the indication that the UE supports the multi USIM mode is a different message from the message comprising the paging filtering information to command the first network to apply the paging filtering.

In some embodiments, the message comprising the paging filtering information to command the first network to apply the paging filtering is a service request message.

In some embodiments, the message comprising the indication that the UE supports the multi USIM mode is a registration request message, and the message comprising the indication that the first network supports the paging filtering based on the paging filtering information from the UE and that the paging filtering is preferred by the first network is a registration accept message.

According to an eleventh aspect, there is provided a method of a user equipment, UE, the method comprising: sending, to a first network, a message comprising an indication that the UE supports a multi universal subscriber identity module, USIM, mode; receiving, from the first network, a message comprising an indication that the first network supports paging filtering based on paging filtering information from the UE and that the paging filtering is preferred by the first network; in response to receiving the indication that the first network supports the paging filtering based on the paging filtering information from the UE and that the paging filtering is preferred by the first network, deciding to send the paging filtering information to the first network to command the first network to apply the paging filtering, based at least on the UE being configured to support the paging filtering and one or more state capabilities of the UE; and sending, to the first network, a message comprising the paging filtering information to command the first network to apply the paging filtering.

In some embodiments, said deciding to send the paging filtering information to the first network to command the first network to apply the paging filtering is performed despite the UE being configured to apply a paging response behaviour based on a paging cause code in a paging message received from the first network.

In some embodiments, receiving, from a second network, a message comprising an indication that the second network supports providing a paging cause code in a paging message to the UE.

In some embodiments, the message comprising the indication that the UE supports the multi USIM mode is a same message as the message comprising the paging filtering information to command the first network to apply the paging filtering

In some embodiments, the message comprising the indication that the UE supports the multi USIM mode is a different message from the message comprising the paging filtering information to command the first network to apply the paging filtering.

In some embodiments, the message comprising the paging filtering information to command the first network to apply the paging filtering is a service request message.

In some embodiments, the message comprising the indication that the UE supports the multi USIM mode is a registration request message, and the message comprising the indication that the first network supports the paging filtering based on the paging filtering information from the UE and that the paging filtering is preferred by the first network is a registration accept message.

According to a twelfth aspect, there is provided an apparatus, comprising at least one processor, and at least one memory storing instructions that when executed by the at least one processor, cause the apparatus at least to perform: receiving, from a user equipment (UE), a message comprising an indication that the UE supports a multi universal subscriber identity module (USIM) mode; sending, to the UE, a message comprising an indication that a first network comprising the apparatus supports paging filtering based on paging filtering information from the UE and that the paging filtering is preferred by the first network; and receiving, from the UE, a message comprising the paging filtering information to command the first network to apply the paging filtering,wherein the message comprising the paging filtering information is based at least on the UE being configured to support the paging filtering and one or more state capabilities of the UE.

The above-noted aspects and features may be implemented in systems, apparatuses, methods, articles and/or non-transitory computer-readable media depending on the desired configuration. The subject disclosure may be implemented in and/or used with a number of different types of devices, including but not limited to cellular phones, tablet computers, wearable computing devices, portable media players, and any of various other computing devices.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings and claims.

### BRIEF DESCRIPTION OF THE DRAWINGS

A better understanding of the subject disclosure can be obtained when the following detailed description of various embodiments is considered in conjunction with the following drawings, in which:
FIG. 1 shows a schematic diagram of an example communication system comprising a base station and a plurality of communication devices;
FIG. 2 shows a schematic diagram of an example mobile communication device;
FIG. 3 shows a schematic diagram of an example control apparatus;
FIGS. 4 and 5 illustrate flow charts of methods for controlling Multi-USIM behaviour of UEs according to some embodiments of the subject disclosure;
FIGS. 6 to 9 illustrate exemplary signaling flows for controlling Multi-USIM behaviour of UEs according to some embodiments of the subject disclosure;
FIGS. 10A-10D illustrate examples for controlling Multi-USIM behaviour of UEs according to some embodiments of the subject disclosure;
FIGS. 11 and 12 illustrate flow charts of methods for controlling paging filtering behaviour of UEs according to some embodiments of the subject disclosure;
FIGS. 13 and 14 illustrate exemplary signaling flows for controlling paging filtering behaviour of UEs according to some embodiments of the subject disclosure;
FIGS. 15A-15C illustrate examples for controlling paging filtering behaviour of UEs according to some embodiments of the subject disclosure;
FIG. 16 illustrates the general registration call flow for 5G systems with controlling Multi-USIM behaviour of UEs according to some embodiments of the subject disclosure.

### DETAILED DESCRIPTION

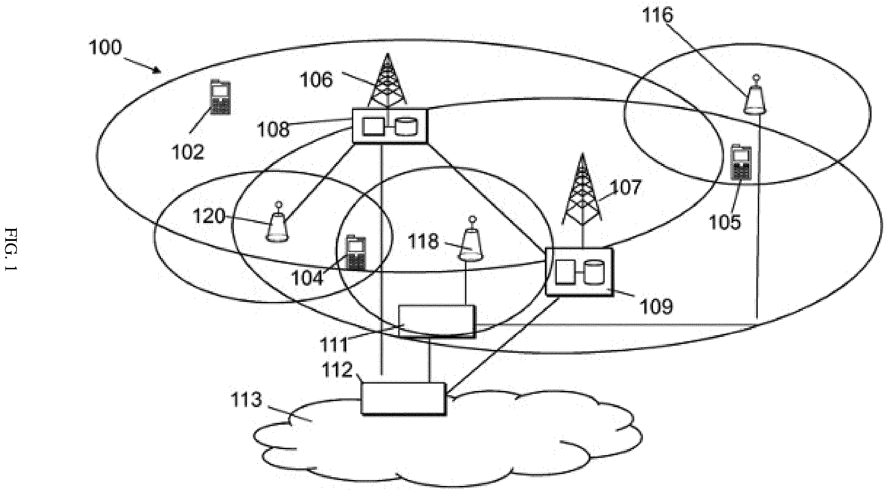

Before explaining the examples in detail, certain general principles of a wireless communication system and mobile communication devices are briefly explained with reference to FIGS. 1 to 3 to assist in understanding the technology underlying the described examples.

In a wireless communication system 100, such as that shown in FIG. 1, mobile communication devices or user equipment (UE) 102, 104, 105 are provided wireless access via at least one base station (e.g., next generation NB, gNB) or similar wireless transmitting and/or receiving node or point. Base stations may be controlled or assisted by at least one appropriate controller apparatus, so as to enable operation thereof and management of mobile communication devices in communication with the base stations. The controller apparatus may be located in a radio access network (e.g., wireless communication system 100) or in a core network (CN) (not shown) and may be implemented as one central apparatus or its functionality may be distributed over several apparatuses. The controller apparatus may be part of the base station and/or provided by a separate entity such as a Radio Network Controller. In FIG. 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

In FIG. 1, base stations 106 and 107 are shown as connected to a wider communications network 113 via gateway 112. A further gateway function may be provided to connect to another network.

As used herein, the term "base station" has the full breadth of its ordinary meaning, and at least includes a wireless communication station installed at a fixed location and used to communicate as part of a wireless telephone system or radio system. The communication area (or coverage area) of the base stations may be referred to as a "cell." The base stations and the UEs may be configured to communicate over the transmission medium using any of various radio access technologies (RATs), also referred to as wireless communication technologies, or telecommunication standards described hereinbelow. As illustrated in FIG. 1, while one of the base stations may act as a "serving cell" for UEs, each UE may also be capable of receiving signals from (and possibly within communication range of) one or more other cells (which might be provided by the base stations and/or any other base stations), which may be referred to as "neighboring cells".

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example WLAN and may be WLAN APs. The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

An example of wireless communication systems are architectures standardized by the 3rd Generation Partnership Project (3GPP). A latest 3GPP based development is often referred to as the long-term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as wireless local area network (WLAN) and/or WiMax (Worldwide Interoperability for Microwave Access). A base station can provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE Advanced. Base stations of NR systems may be known as next generation Node Bs (gNBs). Changes to the network architecture may depend on the need to support various radio technologies and finer QoS support, and some on-demand requirements for e.g. QoS levels to support QoE of user point of view. Also network aware services and applications, and service and application aware networks may bring changes to the architecture. Those are related to Information Centric Network (ICN) and User-Centric Content Delivery Network (UC-CDN) approaches. NR may use multiple input-multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UE(s) exchanging traffic with the DN.

The UPF is controlled by an SMF (Session Management Function) that receives policies from a PCF (Policy Control Function). The CN may also include an AMF (Access & Mobility Function).

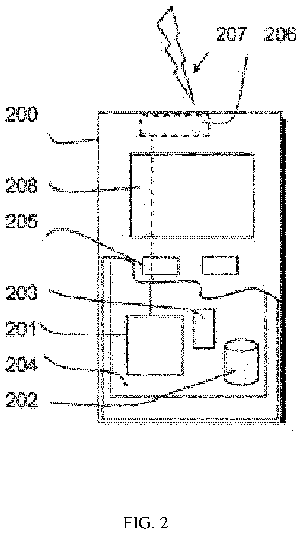

A possible mobile communication device will now be described in more detail with reference to FIG. 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a smart phone, a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (e-mail), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

In an industrial application a communication device may be a modem integrated into an industrial actuator (e.g., a robot arm) and/or a modem acting as an Ethernet-hub that will act as a connection point for one or several connected Ethernet devices (which connection may be wired or unwired).

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as keypad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In FIG. 2 transceiver apparatus is designated schematically by block 206. The transceiver apparatus 206 may be provided for example by means of a radio part and associated antenna arrangement. The antenna arrangement may be arranged internally or externally to the mobile device.

The mobile device 200 may also or alternatively be configured to communicate using one or more global navigational satellite systems (GNSS, e.g., GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

Generally, the communication device 200 illustrated in FIG. 2 includes a set of components configured to perform core functions. For example, this set of components may be implemented as a system on chip (SOC), which may include portions for various purposes. Alternatively, this set of components may be implemented as separate components or groups of components for the various purposes. The set of components may be coupled (e.g., communicatively; directly or indirectly) to various other circuits of the communication device 200.

The communication device 200 may include at least one antenna in communication with a transmitter and a receiver (e.g., the transceiver apparatus 206). Alternatively, transmit and receive antennas may be separate. The communication device 200 may also include a processor (e.g., the at least one data processing entity 201) configured to provide signals to and receive signals from the transmitter and receiver, respectively, and to control the functioning of the communication device 200. The processor may be configured to control the functioning of the transmitter and receiver by effecting control signaling via electrical leads to the transmitter and receiver. Likewise, the processor may be configured to control other elements of the communication device 200 by effecting control signaling via electrical leads connecting processor to the other elements, such as a display (e.g., display 208) or a memory (e.g., the at least one memory 202). The processor may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, in some examples, the processor may comprise a plurality of processors or processing cores.

The communication device 200 may be capable of operating with one or more air interface standards, communication protocols, modulation types, access types, and/or the like. Signals sent and received by the processor may include signaling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the communication device 200 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, Internet Protocol Multimedia Subsystem (IMS) communication protocols (for example, session initiation protocol (SIP) and/or the like. For example, the communication device 200 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the UE 120 may be capable of operating in accordance with 2.5G wireless communication protocols General Packet Radio Service (GPRS), Enhanced Data GSM Environment (EDGE), and/or the like. Further, for example, the communication device 200 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The communication device 200 may be additionally capable of operating in accordance with 3.9G wireless communication protocols, such as Long-Term Evolution (LTE), Evolved Universal Terrestrial Radio Access Network (E-UTRAN), and/or the like. Additionally, for example, the communication device 200 may be capable of operating in accordance with 4G wireless communication protocols, such as LTE Advanced, 5G, and/or the like as well as similar wireless communication protocols that may be subsequently developed.

It is understood that the processor may include circuitry for implementing audio/video and logic functions of the communication device 200. For example, the processor may comprise a digital signal processor device, a microprocessor device, an analog-to-digital converter, a digital-to-analog converter, and/or the like. Control and signal processing functions of the communication device 200 may be allocated between these devices according to their respective capabilities. The processor may additionally comprise an internal voice coder (VC), an internal data modem (DM), and/or the like. Further, the processor may include functionality to operate one or more software programs, which may be stored in memory. In general, the processor and stored software instructions may be configured to cause the communication device 200 to perform actions. For example, the processor may be capable of operating a connectivity program, such as a web browser. The connectivity program may allow the communication device 200 to transmit and receive web content, such as location-based content, according to a protocol, such as wireless application protocol (WAP), hypertext transfer protocol (HTTP), and/or the like.

The communication device 200 may also comprise a user interface including, for example, an earphone or speaker, a ringer, a microphone, a display, a user input interface, and/or the like, which may be operationally coupled to the processor. The display may, as noted above, include a touch sensitive display, where a user may touch and/or gesture to make selections, enter values, and/or the like. The processor may also include user interface circuitry configured to control at least some functions of one or more elements of the user interface, such as the speaker, the ringer, the microphone, the display, and/or the like. The processor and/or user interface circuitry comprising the processor may be configured to control one or more functions of one or more elements of the user interface through computer program instructions, for example, software and/or firmware, stored on a memory accessible to the processor, for example, volatile memory, non-volatile memory, and/or the like. The communication device 200 may include a battery for powering various circuits related to the mobile terminal, for example, a circuit to provide mechanical vibration as a detectable output. The user input interface may comprise devices allowing the communication device 200 to receive data, such as a keypad (e.g., keypad 206) and/or other input devices. The keypad can also be a virtual keyboard presented on display or an externally coupled keyboard.

The communication device 200 may also include one or more mechanisms for sharing and/or obtaining data. For example, the communication device 200 may include a short-range radio frequency (RF) transceiver and/or interrogator, so data may be shared with and/or obtained from electronic devices in accordance with RF techniques. The communication device 200 may include other short-range transceivers, such as an infrared (IR) transceiver, a Bluetooth^{TM} (BT) transceiver operating using Bluetooth^{TM} wireless technology, a wireless universal serial bus (USB) transceiver, a Bluetooth^{TM} Low Energy transceiver, a ZigBee transceiver, an ANT transceiver, a cellular device-to-device transceiver, a wireless local area link transceiver, and/or any other short-range radio technology. The communication device 200 and, in particular, the short-range transceiver may be capable of transmitting data to and/or receiving data from electronic devices within the proximity of the apparatus, such as within 10 meters, for example. The communication device 200 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The communication device 200 may comprise memory, such as one or more Subscriber Identity Modules (SIM), one or more Universal Subscriber Identity Modules (USIM), one or more removable User Identity Modules (R-UIM), one or more eUICC, one or more UICC, and/or the like, which may store information elements related to a mobile subscriber. In addition, the communication device 200 may include other removable and/or fixed memory. The communication device 200 may include volatile memory and/or non-volatile memory. For example, the volatile memory may include Random Access Memory (RAM) including dynamic and/or static RAM, on-chip or off-chip cache memory, and/or the like. The non-volatile memory, which may be embedded and/or removable, may include, for example, read-only memory, flash memory, magnetic storage devices, for example, hard disks, floppy disk drives, magnetic tape, optical disc drives and/or media, non-volatile random-access memory (NVRAM), and/or the like. Like volatile memory, the non-volatile memory may include a cache area for temporary storage of data. At least part of the volatile and/or non-volatile memory may be embedded in the processor. The memories may store one or more software programs, instructions, pieces of information, data, and/or the like which may be used by the apparatus for performing operations disclosed herein.

Herein, communication devices with one or more Universal Subscriber Identity Module (USIM) are referred to as communication devices supporting multi (multi USIM, Multi-USIM or MUSIM). Such communication device support more than one active USIM.

The memories may comprise an identifier, such as an International Mobile Equipment Identification (IMEI) code, capable of uniquely identifying the communication device 200. The memories may comprise an identifier, such as an international mobile equipment identification (IMEI) code, capable of uniquely identifying the communication device 200. In the example embodiment, the processor may be configured using computer code stored at memory to cause the processor to perform operations disclosed herein.

Some of the embodiments disclosed herein may be implemented in software, hardware, application logic, or a combination of software, hardware, and application logic. The software, application logic, and/or hardware may reside on the memory, the processor, or electronic components, for example. In some example embodiment, the application logic, software or an instruction set is maintained on any one of various conventional computer-readable media. In the context of this document, a "computer-readable medium" may be any non-transitory media that can contain, store, communicate, propagate or transport the instructions for use by or in connection with an instruction execution system, apparatus, or device, such as a computer or data processor circuitry, with examples depicted at FIG. 2, computer-readable medium may comprise a non-transitory computer-readable storage medium that may be any media that can contain or store the instructions for use by or in connection with an instruction execution system, apparatus, or device, such as a computer.

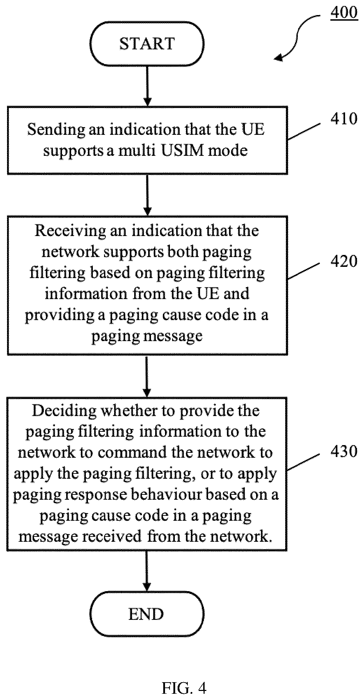

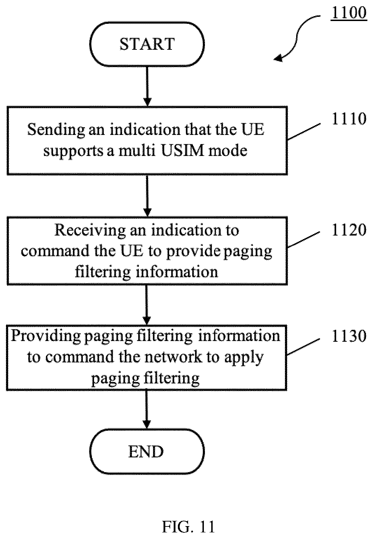

In some embodiments, the communication device 200 (i.e., a user equipment (UE) in a network) comprises the processor (e.g., the at least one data processing entity 201) and the memory (e.g., the at least one memory 202). The memory includes computer program code causing the communication device 200 to perform processing according to the methods described below with reference to FIGS. 4 and 11.

In an example, the computer program code causes the communication device 200 to control Multi-USIM behaviour of UEs. In particular, the computer program code causes the communication device 200 to send an indication that the UE supports a multi USIM mode to the network, e.g., via transceiver 206, receive an indication that the network supports both paging filtering based on paging filtering information from the UE and providing a paging cause code in a paging message to the UE from the network, e.g., via transceiver 206, and in response to receiving the indication, decide whether to provide the paging filtering information to the network to command the network to apply the paging filtering, or to apply paging response behaviour based on a paging cause code in a paging message received from the network. Further, in another example, the computer program code causes the communication device 200 receive a preference indication, e.g., via the transceiver 206 from the network, the preference indication indicating that one of paging filtering or paging response behaviour based on a paging cause code in a paging message received from the network is preferred by the network, wherein computer program code causes the UE to decide whether to provide the paging filtering information or to apply paging response behaviour based on a paging cause code in a paging message received from the network based on the preference indication.

In another example, the computer program code causes the communication device 200 to control paging filtering behaviour of UEs. In particular, the computer program code causes the communication device 200 send an indication that the UE supports a multi USIM mode to the network, e.g., via the transceiver 206, receive an indication to command the UE to provide paging filtering information from the network, e.g., via the transceiver 206, and provide paging filtering information to the network, e.g., via the transceiver 206 to command the network to apply paging filtering.

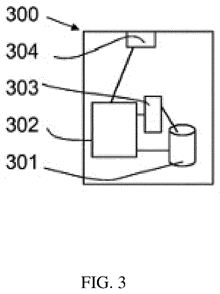

FIG. 3 shows an example embodiment of a control apparatus for a communication system, for example to be coupled to and/or for controlling a station of an access system, such as a RAN node, e.g., a base station, eNB or gNB, a relay node or a core network node such as an MME or S-GW or P-GW, or a core network function such as AMF/SMF, or a server or host. The method may be implanted in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

Generally, the control apparatus 300 has an antenna, which transmits and receives radio signals. A radio frequency (RF) transceiver module, coupled with the antenna, receives RF signals from antenna, converts them to baseband signals and sends them to processor (e.g., the at least one data processing unit 302, 303). RF transceiver also converts received baseband signals from processor, converts them to RF signals, and sends out to antenna. Processor processes the received baseband signals and invokes different functional modules to perform features in control apparatus 300. Memory (e.g., the at least one memory 301) stores program instructions and data to control the operations of the control apparatus 300. In the example of FIG. 3, the control apparatus 300 also includes protocol stack and a set of control functional modules and circuit. PDU session handling circuit handles PDU session establishment and modification procedures. Policy control module that configures policy rules for UE. Configuration and control circuit provides different parameters to configure and control UE of related functionalities including mobility management and session management. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines.

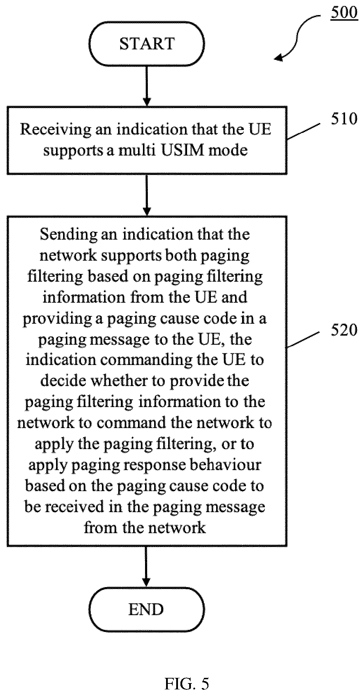

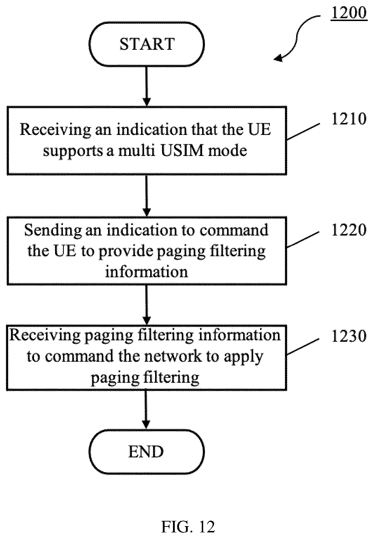

In some embodiments, the control apparatus 300 (i.e., the base station or the wireless transmitting and/or receiving point equipment) comprises the processor (e.g., the at least one data processing unit 302, 303) and the memory (e.g., the at least one memory 301). The memory includes computer program code causing the control apparatus 300 to perform processing according to the method described below with reference to FIGS. 5 and 12.

In an example, the computer program code causes the control apparatus 300 to control Multi-USIM behaviour of UEs. In particular, the computer program code causes the control apparatus 300 to receive an indication that the UE supports a multi USIM mode from a user equipment (UE), e.g., via the RF transceiver module, and send an indication from the UE, e.g., via the RF transceiver module that the network supports both paging filtering based on paging filtering information from the UE and providing a paging cause code in a paging message to the UE, from the UE, the indication commanding the UE to decide whether to provide the paging filtering information to the network to command the network to apply the paging filtering, or to apply paging response behaviour based on a paging cause code in a paging message received from the network based on the paging cause code to be received in the paging message from the network. Further, in another example, the computer program code causes the control apparatus 300 to at least send a preference indication, e.g., via the RF transceiver module to the UE, the preference indication indicating that one of paging filtering or paging response behaviour based on a paging cause code in a paging message received from the network is preferred by the network, and commanding the UE to decide whether to provide the paging filtering information or to apply paging response behaviour based on a paging cause code in a paging message received from the network based on the preference indication.

In another example, the computer program code causes the communication device 200 to control paging filtering behaviour of UEs. In particular, the computer program code causes the control apparatus 300 to receive an indication from a user equipment (UE), e.g., via the RF transceiver module that the UE supports a multi USIM mode, send an indication, e.g., via the RF transceiver module to the UE to command the UE to provide paging filtering information, and receive paging filtering information from the UE, e.g., via the RF transceiver module to command the network to apply paging filtering.

Now referring to FIGS. 4 to 10, methods for controlling Multi-USIM behaviour of UEs according to some embodiments of the subject disclosure will be described.

FIG. 4 illustrates a flow chart of a method for controlling Multi-USIM behaviour of UEs according to some embodiments. The method is performed by a user equipment (UE) with more than one Universal Subscriber Identity Module (USIM), i.e., multi USIM. The UE supports that more than one of the multi USIM is active. For example, the UE may be represented by any one of the mobile communication devices 102, 104, 105 of the wireless communication system 100 as described above with reference to FIG. 1, or the communication device 200 as described above with reference to FIG. 2.

The method 400 starts with sending an indication to the network that the UE supports a multi USIM mode, at block 410. The indication indicates that the UE supports that more than one USIM is active. The multi USIM mode does not need to be in operation at the time the indication is sent at block 410. The indication may be sent to a base station (e.g., next generation NB, gNB). More specifically, the indication is sent to a core network function such as AMF (Access & Mobility Function). For example, the base station may be represented by any one of the base stations 106, 107, 116, 118, 120 shown in FIG. 1.

Alternatively or optionally, the indication sent at block 410 may indicate that the UE is in the multi USIM mode of operation, i.e., that more than one USIM is active, according to some embodiments. In other embodiments, also alternatively or optionally, the indication sent at block 410 may indicate that the UE supports at least one of the paging filtering and the paging response behaviour based on a paging cause code in a paging message received from the network (also referred to as the paging response behaviour). In case the UE supports both the paging filtering and the paging response behaviour, the indication sent to the network may indicates that the UE supports both providing the paging filtering information and applying the paging response behaviour.

Within the subject disclosure, paging filtering or paging filtering behaviour is that the UE provides paging filtering information to the network to command the network to apply paging filtering. The UE provides the paging filtering information if, for example, the UE is unable to attend at least in part one or more services with the network. In response to receiving the paging filtering information, the network applies paging filtering and prevents to trigger a downlink data notification to the UE. The paging response behaviour as used in the subject disclosure means that the network provides a paging cause code in a paging message to the UE. In response to receiving the paging cause code, the UE decides on whether to attend to paging or not.

In some embodiments, the indication may be sent at block 410 as part of a message such as a registration request message. For example, the registration request message may correspond to the Registration Request as defined in clause 4.2.2.2.2 of 3GPP TS 23.502 version 16.6.0.

At block 420, the UE receives from the network an indication that the network supports both paging filtering based on paging filtering information from the UE and providing a paging cause code in a paging message to the UE. That is, the network indicates support for both the paging filtering behaviour and the paging response behavior based on checking the content of a paging cause code in a paging message to the UE. The indication sent to the UE is based on the capabilities of the network and/or a policy of the network. In an example, the indication informs the UE about the capabilities of the network and also signals the UE to decide whether to apply the paging filtering behaviour or the paging response behaviour.

In some embodiments, the indication may be received at block 420 as part of a message such as a registration accept message. For example, the registration accept message may correspond to the Registration Accept as defined in clause 4.2.2.2.2 of 3GPP TS 23.502 version 16.6.0.

In response to receiving the indication from the network at block 420, the UE decides whether to apply the paging filtering behaviour or the paging response behaviour, at block 430. As a result, if the UE decides at block 430 to apply the paging filtering behaviour, the UE provides paging filtering information to the network to command the network to apply the paging filtering. Otherwise, if the UE decides at block 430 to apply the paging response behaviour, the UE relies on a paging cause code in a paging message received from the network. In some embodiments, the UE decides whether to apply the paging filtering behaviour or the paging response behaviour at block 430 based on capabilities of the UE. In particular, if the UE supports the paging filtering behaviour, the UE may decide at block 430 to apply the paging filtering behaviour. If the UE supports the paging response behaviour, the UE may decide at block 430 to apply the paging response behaviour. In case the UE supports both the paging filtering behaviour (i.e., to provide the paging filtering information to the network) and the paging response behaviour, the UE may decide whether to provide the paging filtering information or to apply paging response behaviour based on a default behaviour. The default behaviour may be based on a decision defined in the standard, i.e., a behavior defined in the standards.

In some embodiments, the method 400 further includes the UE to receive a preference indication from the network. The preference indication indicates that one of paging filtering or paging response behaviour is preferred by the network. The UE decides at block 430 whether to provide the paging filtering information or to apply paging response behaviour is based on the preference indication. In yet another embodiment, the preference indication may be received by the UE without receiving the indication at block 420. In this case, the preference indication is an implicit indication that the network supports both paging filtering based on paging filtering information from the UE and providing a paging cause code in a paging message.

In some embodiments, the method 400 may further include the UE to receive a preference indication indicating to the UE that the network prefers the paging filtering behaviour. Assuming that the network supports both the paging filtering behaviour and the paging response behaviour, a policy in the network may require the UE to apply the paging filtering behaviour and provide the paging filtering information. The preference indication may be received together with or as part of the indication received from the network at block 420. That is, the preference indication may be included in the registration accept message, as described above. In response to receiving the preference indication, the UE decides at block 430 to apply the paging filtering behaviour if the UE supports at least the paging filtering behaviour. That is, assuming that the UE supports both the paging filtering behaviour and the paging response behaviour, the UE decides at block 430 to apply the paging filtering behaviour as also preferred by the network. In response to deciding at block 430, the UE provides the paging filtering information to the network to command the network to apply the paging filtering. Additionally, the UE decides at block 430 to apply the paging response behaviour if the UE supports applying the paging response behaviour only. In this case, as the UE does not support the paging filtering behaviour as preferred by the network, the UE applies the paging response behaviour as supported in order to provide paging behaviour at all. In response to deciding to apply the paging response behaviour, the UE relies on a paging cause code received from the network in a paging message. The UE applies the paging response behaviour based on the paging cause code received in the message.

In some embodiments, the method 400 may further include the UE to receive a preference indication indicating to the UE that the network prefers the paging response behaviour (i.e., the network prefers providing a paging cause code in a paging message). Assuming that the network supports both the paging filtering behaviour and the paging response behaviour, a policy in the network may require the UE to apply the paging response behaviour and rely on a paging cause code provided by the network. The preference indication may be received together with or as part of the indication received from the network at block 420. That is, the preference indication may be included in the registration accept message, as described above. In response to receiving the preference indication, the UE decides at block 430 to apply the paging response behaviour if the UE supports at least the paging response behaviour. That is, assuming that the UE supports both the paging filtering behaviour and the paging response behaviour, the UE decides at block 430 to apply the paging response behaviour as also preferred by the network. In response to deciding at block 430, the UE relies on a paging cause code received from the network in a paging message. The UE applies the paging response behaviour based on the paging cause code received in the message. Additionally, the UE decides at block 430 to apply the paging filtering behaviour if the UE supports applying the paging filtering behaviour only. In this case, as the UE does not support the paging response behaviour as preferred by the network, the UE applies the paging filtering behaviour as supported in order to provide paging behaviour at all. In response to deciding to apply the paging filtering behaviour, the UE provides the paging filtering information to the network to command the network to apply the paging filtering.

In some embodiments, in response to deciding to apply paging filtering behaviour at block 430, the UE provides the paging filtering information to the network, for example, if the UE becomes unable to attend to services of the network (e.g., Public Land Mobile Network (PLMN)), when the UE is to leave the network (e.g., PLMN) or when the UE is busy at the time of receiving a paging message. The paging filtering information may be provided as part of a message such as a registration request message or a service request message. For example, the registration request message may correspond to the Registration Request or Service Request. In some embodiments, the message sent to the network further comprises a corresponding indication such as a leave indication indicating that the UE is to leave the network (e.g., PLMN) or a busy indication indicating that the UE is busy at the time of receiving a paging message. In other embodiments of the method 400 shown in FIG. 4, the UE may receive an accept message from the network indicating that the network applies paging filtering. The accept message may be receive in response to sending the message including the paging filtering. For example, the accept message may correspond to the Registration Accept or Service Accept. In some embodiments, the UE provides the paging filtering information if the UE determines that the paging filtering behaviour is applicable to one or more current state capabilities of the UE.

According to the method 400 as shown in FIG. 4, at least the paging filtering behaviour may be applied in view of all services of the network (e.g., PLMN). In other embodiments, the paging filtering behaviour may be applied in view of one or more services of the network. In this case, the UE may receive information about the one or more services for which the paging filtering behaviour is to be applied from the network. In response thereto, the UE applies the paging filtering information for the one or more services of the network. In some embodiments, the indication received at block 420 from the network may indicate that the network supports both paging filtering and providing a paging cause code for the one or more services of the network.

FIG. 5 illustrates a flow chart of a method for controlling Multi-USIM behaviour of UEs according to some embodiments. The method is performed by the network. More specifically, the method may be performed by a base station such as the base station represented by the control apparatus 300 as described above with reference to FIG. 3. The base station may be a serving base station, or a gNB or a transmission/reception point (TRP) in a 5G system. Generally, the method may be performed at a core network function such as AMF.

The method 500 starts with receiving an indication from a UE that the UE supports a multi USIM mode, at block 510. The indication may be received from a UE with more than one USIM, i.e., multi USIM. The UE supports that more than one of the multi USIM is active. For example, the UE may be represented by any one of the mobile communication devices 102, 104, 105 of the wireless communication system 100 as described above with reference to FIG. 1, or the communication device 200 as described above with reference to FIG. 2.

Alternatively or optionally, the indication received at block 510 may indicate that the UE is in the multi USIM mode of operation, i.e., that more than one USIM is active, according to some embodiments. In other embodiments, also alternatively or optionally, the indication received at block 510 may indicate that the UE supports at least one of the paging filtering behaviour and the paging response behaviour based on a paging cause code in a paging message received from the network (also referred to as the paging response behaviour). In case the UE supports both the paging filtering and the paging response behaviour, the indication received from the UE may indicate that the UE supports both providing the paging filtering information and applying the paging response behaviour.

In some embodiments, the indication may be received at block 510 as part of a message such as a registration request message. For example, the registration request message may correspond to the Registration Request as defined in clause 4.2.2.2.2 of 3GPP TS 23.502 version 16.6.0.

At block 520, the network sends an indication to the UE that the network supports both paging filtering based on paging filtering information from the UE and providing a paging cause code in a paging message to the UE. That is, the network indicates support for both the paging filtering behaviour and the paging response behaviour based on checking the content of a paging cause code in a paging message to the UE. The indication sent to the UE is based on the capabilities of the network and/or a policy of the network. In some embodiments, the network determines whether to send the indication based on a policy. In an example, the indication informs the UE about the capabilities of the network and also signals the UE to decide whether to apply the paging filtering behaviour or the paging response behaviour. That is, the indication commands the UE to decide whether to provide the paging filtering information to the network to command the network to apply the paging filtering (i.e., to apply the paging filtering behaviour), or to apply paging response behaviour based on a paging cause code to be received in a paging message from the network (i.e., to apply the paging response behaviour).

In some embodiments, the indication may be sent at block 420 as part of a message such as a registration accept message. For example, the registration accept message may correspond to the Registration Accept as defined in clause 4.2.2.2.2 of 3GPP TS 23.502 version 16.6.0.

In response to receiving the indication from the network, the UE may decide whether to apply the paging filtering behaviour or the paging response behaviour as described above with reference to block 430 shown in Fig. 4. For example, in case the UE supports both the paging filtering behaviour and the paging response behaviour, the UE may decide whether to provide the paging filtering information or to apply paging response behaviour based on a default behaviour. The default behaviour may be based on a decision defined in the standards.

In some embodiments, the method 500 further include the network to send a preference indication to the UE. The preference indication indicates that one of paging filtering or paging response behaviour is preferred by the network. Thereby, the UE is commanded to decide whether to provide the paging filtering information or to apply paging response behaviour based on the preference indication. In yet another embodiment, the preference indication may be sent to the UE without sending the indication at block 520. In this case, the preference indication is an implicit indication that the network supports both paging filtering based on paging filtering information from the UE and providing a paging cause code in a paging message.

In some embodiments, the method 500 may further include the network to send a preference indication to the UE. The preference indication may indicate to the UE that the network prefers the paging filtering behaviour. Assuming that the network supports both the paging filtering behaviour and the paging response behaviour, a policy in the network may require the UE to apply the paging filtering behaviour and provide the paging filtering information. The preference indication may be sent together with or as part of the indication sent by the network at block 520. That is, the preference indication may be included in the registration accept message, as described above. The preference indication commands the UE to decide to provide the paging filtering information if the UE supports at least providing the paging filtering information. That is, in response to receiving the preference indication, the UE decides to apply the paging filtering behaviour if the UE supports at least the paging filtering behaviour. In response to deciding, the UE provides the paging filtering information to the network to command the network to apply the paging filtering.

In some embodiments, the method 500 may further include the network to send a preference indication to the UE that the network prefers the paging response behaviour (i.e., the network prefers providing a paging cause code in a paging message). Assuming that the network supports both the paging filtering behaviour and the paging response behaviour, a policy in the network may require the UE to apply the paging response behaviour and rely on a paging cause code provided by the network. The preference indication may be sent together with or as part of the indication received from the network at block 520. That is, the preference indication may be included in the registration accept message, as described above. The preference indication commands the UE to decide to apply the paging response behaviour if the UE supports at least applying the paging response behaviour. In response to receiving the preference indication, the UE decides to apply the paging response behaviour if the UE supports at least the paging response behaviour. In response to deciding, the UE relies on a paging cause code received from the network in a paging message. The UE applies the paging response behaviour based on the paging cause code received in the message.

In some embodiments, in response to deciding to apply paging filtering behaviour, the UE provides the paging filtering information to the network, for example, if the UE becomes unable to attend to services of the network (e.g., PLMN), when the UE is to leave the network (e.g., PLMN) or when the UE is busy at the time of receiving a paging message. The paging filtering information is to configure or command the network to apply paging filtering. As a consequence, the network is triggered to page and prevents to trigger downlink data notifications for services of the network to the UE. The paging filtering information may be received at the network as part of a message such as a registration request message or a service request message. For example, the registration request message may correspond to the Registration Request or Service Request. In some embodiments, the message received by the network further comprises a corresponding indication such as a leave indication indicating that the UE is to leave the network (e.g., PLMN) or a busy indication indicating that the UE is busy at the time of receiving a paging message. In other embodiments of the method 500 shown in FIG. 5, the network may send an accept message to the UE indicating that the network applies paging filtering. The accept message may be sent in response to receiving the message that includes the paging filtering. For example, the accept message may correspond to the Registration Accept or Service Accept. In some embodiments, the UE provides the paging filtering information if the UE determines that the paging filtering behaviour is applicable to one or more current state capabilities of the UE.

According to the method 500 as shown in FIG. 5, at least the paging filtering behaviour may be applied in view of all services of the network (e.g., PLMN). In other embodiments, the paging filtering behaviour may be applied in view of one or more services of the network. In this case, the network may send information about the one or more services for which the paging filtering behaviour is to be applied to the UE. In response thereto, the UE applies the paging filtering information for the one or more services of the network. In some embodiments, the indication sent at block 520 to the UE may indicate that the network supports both paging filtering and providing a paging cause code for the one or more services of the network.

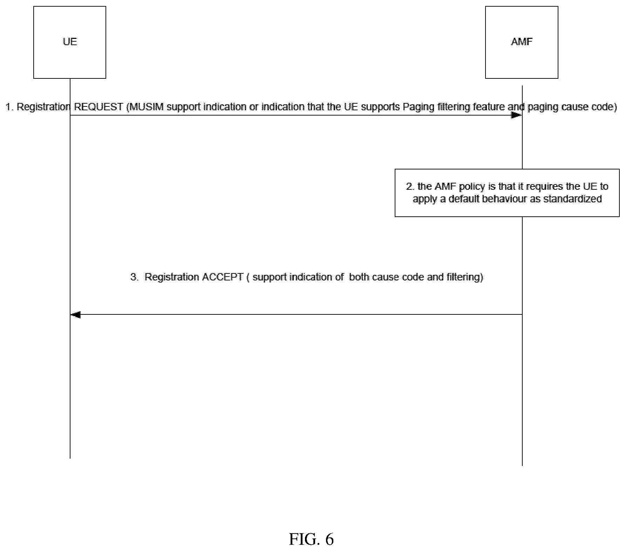

Examples of the subject disclosure will now be described with reference to the signaling flows shown in FIGS. 6 to 9.

The examples shown in FIGS. 6 to 9 relate to the implementation of the methods of the subject disclosure in the 5G system. In particular, the signaling flow between a UE supporting a multi USIM mode and 5G Core Access and Mobility Management Function (AMF).

FIG. 6 illustrates a first signaling flow for controlling Multi-USIM behaviour of UEs, according to some embodiments of the subject disclosure.

If the UE supports multi USIM mode or is in multi USIM mode of operation, the UE may send a registration request to the AMF (step 1). The registration request comprises an indication of multi USIM support (MUSIM support indication) or an indication that the UE supports the paging filtering feature or an indication that the UE is in multi USIM mode of operation. In addition, the registration request may also comprise an indication that the UE supports paging filtering feature (i.e., the paging filtering behaviour as described above) and/or the paging cause code (i.e., the paging response behaviour based on a paging cause code in a paging message received from the network as described above; also referred to as the paging response behaviour). In response to receiving the registration request, the AMF may decide, e.g., based on an AMF policy whether the network requires the UE to apply a default behaviour (i.e., a behaviour as defined in the standards) in deciding whether to apply the paging filtering behaviour or the paging response behaviour if supported by the UE (step 2). In response thereto, the AMF may send to the UE a registration accept (step 3). The registration accept may include an information element that indicates to the UE that the network supports both the paging filtering behaviour and the paging response behaviour. Once received, the UE decides whether to apply paging filtering behaviour or paging response behaviour based on the default behaviour if the UE also supports both. Otherwise, the UE may decide to apply the paging behaviour supported by the UE.

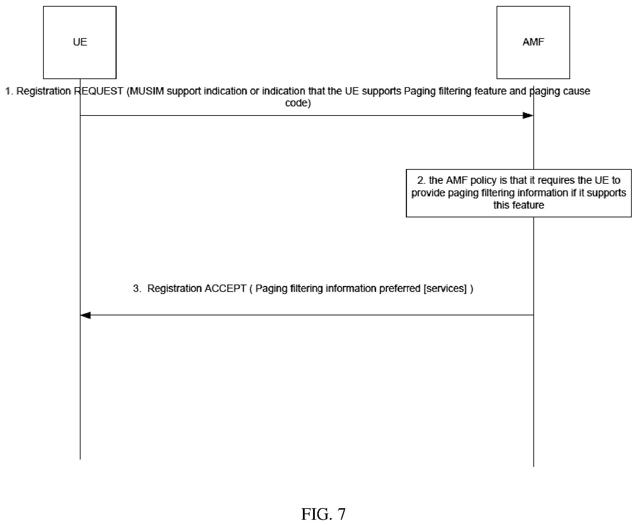

FIG. 7 illustrates a second signaling flow for controlling Multi-USIM behaviour of UEs, according to some embodiments of the subject disclosure.

If the UE supports multi USIM mode or is in multi USIM mode of operation, the UE may send a registration request to the AMF (step 1). The registration request comprises an indication of multi USIM support (MUSIM support indication) or an indication that the UE supports the paging filtering feature or an indication that the UE is in multi USIM mode of operation. In addition, the registration request may also comprise an indication that the UE supports paging filtering feature (i.e., the paging filtering behaviour as described above) and/or the paging cause code (i.e., the paging response behaviour based on a paging cause code in a paging message received from the network as described above; also referred to as the paging response behaviour). In response to receiving the registration request, the AMF may decide, e.g., based on an AMF policy whether the network requires the UE to provide paging filtering information (i.e., to apply the paging filtering behaviour) if the UE supports the paging filtering behaviour (step 2). In response thereto, the AMF may send to the UE a registration accept (step 3). The registration accept may include an information that paging filtering information is preferred by the network (i.e., the preference information as described above). Additionally, the registration accept may include an information element that indicates to the UE that the network supports both the paging filtering behaviour and the paging response behaviour (example including this information element not shown in FIG. 7). The network may also indicate to the UE that paging filtering behaviour preferred by the network applies in view of one or more services of the network. Once received, the UE decides to apply paging filtering behaviour if the UE supports paging filtering behaviour. Otherwise, the UE may decide to apply the paging response behaviour if supported by the UE.

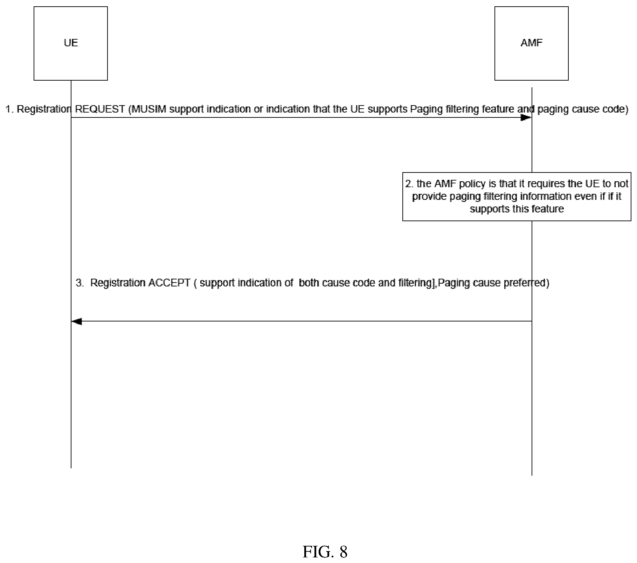

FIG. 8 illustrates a third signaling flow for controlling Multi-USIM behaviour of UEs, according to some embodiments of the subject disclosure.

If the UE supports multi USIM mode or is in multi USIM mode of operation, the UE may send a registration request to the AMF (step 1). The registration request comprises an indication of multi USIM support (MUSIM support indication) or an indication that the UE supports the paging filtering feature or an indication that the UE is in multi USIM mode of operation. In addition, the registration request may also comprise an indication that the UE supports paging filtering feature (i.e., the paging filtering behaviour as described above) and/or the paging cause code (i.e., the paging response behaviour based on a paging cause code in a paging message received from the network as described above; also referred to as the paging response behaviour). In response to receiving the registration request, the AMF may decide, e.g., based on an AMF policy whether the network requires the UE not to provide paging filtering information (i.e., to apply the paging filtering behaviour) even if the UE supports the paging filtering behaviour (step 2). In other words, the AMF may decide whether the network requires the UE to rely on a paging cause code in a paging message (i.e., to apply the paging response behaviour based on a paging cause code in a paging message received from the network as described above) if the UE supports the paging response behaviour. In response thereto, the AMF may send to the UE a registration accept (step 3). The registration accept may include an information that paging cause code is preferred by the network (i.e., the preference information as described above). Additionally, the registration accept may include an information element that indicates to the UE that the network supports both the paging filtering behaviour and the paging response behaviour (example without this information element not shown in FIG. 8). The network may also indicate to the UE that paging response behaviour preferred by the network applies in view of one or more services of the network (not shown). Once received by the UE, the UE decides to apply paging response behaviour if the UE supports paging response behaviour. Otherwise, the UE may decide to apply the paging filtering behaviour if supported by the UE.

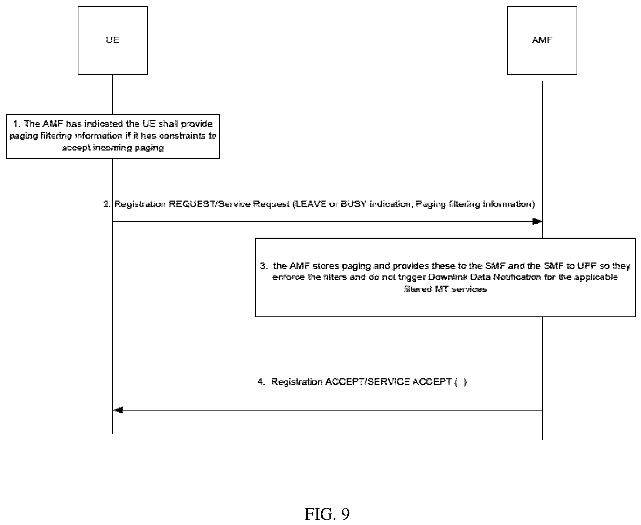

FIG. 9 illustrates a third signaling flow for controlling Multi-USIM behaviour of UEs, according to some embodiments of the subject disclosure.

The AMF has indicated that the UE shall provide paging filtering information if the UE has constraints to accept paging (step 1). In other words, the UE received the registration accept and is configured/commanded to report paging filtering information. For example, when the UE becomes unable to (fully or partly) attend to services in the PLMN, when the UE indicates to leave the PLMN or the UE is busy when receiving a paging message, the UE may send a registration request or service request to the AMF (step 2). The registration request or service request may include, for example, an indication that the UE is to leave the PLMN (LEAVE indication) or an indication that the UE has been busy when receiving a paging message (BUSY indication). Furthermore, the registration request or service request may include the paging filtering information. In response to receiving the registration request or service request with the paging filtering information, the AMF performs paging filtering (step 3). For example, the AMF may store paging information and provides the paging information to the SMF and the SMF to the UPF so that the SMF and/or the UPF enforce filters for paging. Also, downlink data notification is not triggered. For example, the downlink data notification is not triggered for filtered services (e.g., MT services). In response thereto, the AMF may send a registration accept or service accept.

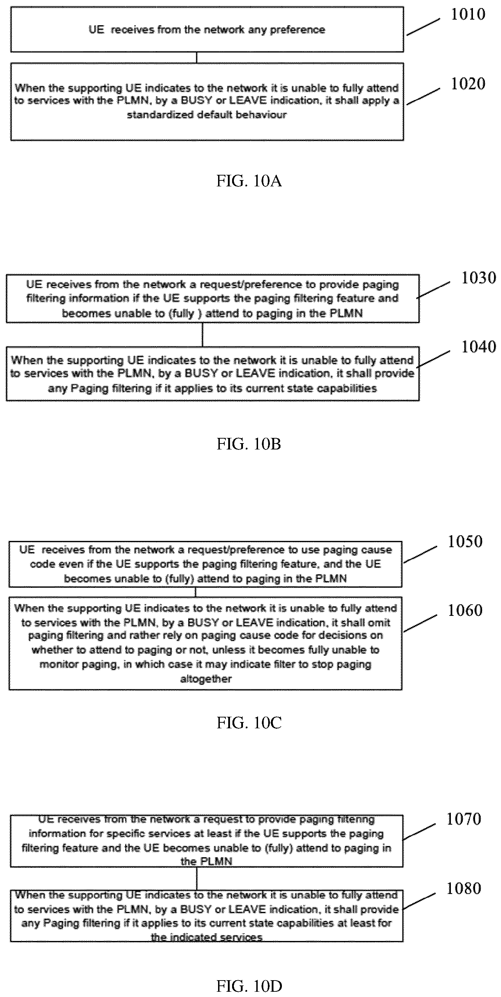

Further examples of the subject disclosure will now be described with reference to the methods shown in FIGS. 10A-10D. The examples shown in FIGS. 10A-10D relate to the implementation of the methods for controlling Multi-USIM behaviour of UEs in the 5G system.

FIG. 10A illustrates a first example of the method for controlling Multi-USIM behaviour of UEs, according to some embodiments of the subject disclosure.

At block 1010, the UE may receive from the network no preference in view of whether the UE shall apply the paging filtering behaviour or the paging response behaviour based on a paging cause code in a paging message received from the network. For example, the UE may receive from the network an indication that the network supports both the paging filtering behaviour or the paging response behaviour based on a paging cause code in a paging message received from the network, without any preference (i.e., no preference indication) as described above with reference to FIG. 4. In response to receiving the no preference from the network, the UE decides based on a default behaviour (i.e., a behavior defined in the standards) as described above whether to apply the paging filtering behaviour or the paging response behaviour based on a paging cause code in a paging message received from the network if the UE supports both. Otherwise, the UE applies the paging behaviour the UE supports.

At block 1020, when the UE indicates to the network that the UE is unable to (fully or partly) attend to one or more services with the PLMN, for example, by a BUSY or LEAVE indication, the UE shall apply the paging behaviour (i.e., either the paging filtering behaviour or the paging response behaviour based on a paging cause code in a paging message received from the network) as decided based on the default behaviour.

FIG. 10B illustrates a second example of the method for controlling Multi-USIM behaviour of UEs, according to some embodiments of the subject disclosure.

At block 1030, the UE may receive from the network a request/preference to provide paging filtering information as described above with reference to FIG. 4. For example, the UE may receive from the network an indication that the network supports both the paging filtering behaviour and the paging response behaviour based on a paging cause code in a paging message received from the network. The preference received from the network indicates that the network prefers that the UE applies the paging filtering behaviour.

At block 1040, when the UE indicates to the network that the UE is unable to (fully or partly) attend to one or more services with the PLMN, for example, by a BUSY or LEAVE indication, the UE shall apply, the UE shall provide any paging filtering if paging filtering applies to current state capabilities of the UE.

FIG. 10C illustrates a third example of the method for controlling Multi-USIM behaviour of UEs, according to some embodiments of the subject disclosure.

At block 1050, the UE may receive from the network a request/preference to use paging cause code even of the UE supports paging filtering as described above with reference to FIG. 4. For example, the UE may receive from the network an indication that the network supports both the paging filtering behaviour and the paging response behaviour based on a paging cause code in a paging message received from the network. The preference received from the network indicates that the network prefers that the UE applies the paging response behaviour based on a paging cause code in a paging message received from the network.

At block 1060, when the UE indicates to the network that the UE is unable to (fully or partly) attend to one or more services with the PLMN, for example, by a BUSY or LEAVE indication, the UE shall omit applying paging filtering behaviour and rather rely on paging cause code for decisions on whether to attend to paging or not. If the UE becomes (fully) unable to monitor paging, the UE may indicate to stop paging altogether.

FIG. 10D illustrates a fourth example of the method for controlling Multi-USIM behaviour of UEs, according to some embodiments of the subject disclosure.

At block 1070, the UE may receive from the network a request to provide paging filtering information for specific services (i.e., for one or more services or for one or more classes of services). For example, the UE may receive from the network an indication to command the UE to provide paging filtering information for specific services as described above with reference to FIG. 4. The request commands or configures the UE to provide paging filtering information for the specific services if the UE supports the paging filtering feature and if the UE becomes unable to (fully or partly) attend to paging in the PLMN (e.g., paging with respect to the specific services).

At block 1080, the UE may provide any paging filtering to the network when the UE indicates to the network that the UE is unable to (fully or partly) attend to the specific services with the PLMN, for example, by a BUSY or LEAVE indication. The UE may provide paging filtering if paging filtering applies to current state capabilities at least for the specific services.

Now referring to FIGS. 11 to 15, methods for controlling paging filtering behaviour of UEs according to some embodiments of the subject disclosure will be described.

FIG. 11 illustrates a flow chart of a method for controlling paging filtering behaviour of UEs according to some embodiments. The method is performed by a user equipment (UE) with more than one Universal Subscriber Identity Module (USIM), i.e., a multi USIM. The UE supports that more than one of the multi USIM is active. For example, the UE may be represented by any one of the mobile communication devices 102, 104, 105 of the wireless communication system 100 as described above with reference to FIG. 1, or the communication device 200 as described above with reference to FIG. 2.

The method 1100 starts with sending an indication to the network that the UE supports a multi USIM mode, at block 1110. The indication indicates that the UE supports that more than one USIM is active. The multi USIM mode does not need to be in operation at the time the indication is sent at block 1110. The indication may be sent to a base station (e.g., next generation NB, gNB). More specifically, the indication is sent to a core network function such as AMF (Access & Mobility Function). For example, the base station may be represented by any one of the base stations 106, 107, 116, 118, 120 shown in FIG. 1.

Alternatively or optionally, the indication sent at block 1110 may indicate that the UE is in the multi USIM mode of operation, i.e., that more than one USIM is active, according to some embodiments. In other embodiments, also alternatively or optionally, the indication sent at block 1110 may indicate that the UE supports paging filtering.

In some embodiments, the indication may be sent at block 1110 as part of a message such as a registration request message. For example, the registration request message may correspond to the Registration Request as defined in clause 4.2.2.2.2 of 3GPP TS 23.502 version 16.6.0.

At block 1120, the UE receives from the network an indication commanding the UE to provide paging filtering information. The indication commands/configures the UE to provide paging filtering information. If commanded/configured, the UE provides the paging filtering information, for example, if the UE becomes unable to attend to services of the network (e.g., Public Land Mobile Network (PLMN)), when the UE is to leave the network (e.g., PLMN) or when the UE is busy at the time of receiving a paging message. In some embodiments, the indication commands/configures the UE to provide paging filtering information if applicable to the UE.

In some embodiments, the indication may be received at block 1120 as part of a message such as a registration accept message. For example, the registration accept message may correspond to the Registration Accept as defined in clause 4.2.2.2.2 of 3GPP TS 23.502 version 16.6.0.

In other embodiments, if the UE does not receive an indication from the network to command the UE to provide paging filtering information, at block 1120, the UE relies on a paging cause code from the network to decide on whether to attend to paging or not. For example, the UE may rely on the cause code for paging in accordance with the enhancement of Rel-17, as described above. That is, the UE determines whether an indication to command the UE to provide paging filtering information is received in response to sending the indication that the UE supports a multi USIM mode, at block 1110.

At block 1130, the UE provides paging filtering information to the network. Providing the paging filtering information configures/commands the network to apply paging filtering. As a consequence, the network is triggered to page and prevents to trigger downlink data notifications for services of the network to the UE.

If commanded/configured, the UE provides the paging filtering information, for example, if the UE becomes unable to attend to services of the network (e.g., PLMN), when the UE is to leave the network (e.g., PLMN) or when the UE is busy at the time of receiving a paging message.

In some embodiments, the paging filtering information may be provided at block 430 as part of a message such as a registration request message or a service request message. For example, the registration request message may correspond to the Registration Request or Service Request.

As already mentioned above, the UE may provide the paging filtering information, for example, when the UE is to leave the network (e.g., PLMN) or when the UE is busy at the time of receiving a paging message. In some embodiments, the message sent to the network further comprises a corresponding indication such as a leave indication indicating that the UE is to leave the network (e.g., PLMN) or a busy indication indicating that the UE is busy at the time of receiving a paging message.

In other embodiments of the method shown in FIG. 11, the UE may receive an accept message from the network indicating that the network applies paging filtering. The accept message may be receive in response to sending the message including the paging filtering. For example, the accept message may correspond to the Registration Accept or Service Accept.

According to the method for controlling paging filtering behaviour of UEs as shown in FIG. 11, the paging filtering behaviour of UEs can be controlled in view of all services of the network (e.g., PLMN). In other embodiments, the paging filtering behaviour of UEs may be controlled for one or more services of the network. The indication received at block 1120 further comprises information about the one or more services for which paging filtering behaviour is to be controlled. In response to receiving the indication, the UE is configured/commanded to provide the paging filtering information for the one or more services of the network.

In some embodiments, the UE provides the paging filtering information, at block 1130, if the UE determines that the paging filtering is applicable to one or more current state capabilities of the UE. If the current state capability indicates to not provide paging filtering information, even if the UE sent the indication to support the multi USIM mode at block 1110 and if the UE received the indication to provide paging filtering information at block 1120, the UE is not triggered to provide the paging filtering information to the network at block 1130.

In other embodiments, the method for controlling paging filtering behaviour of UEs as shown in FIG. 11 further comprises to determine whether the UE supports paging filtering. So, if it is determined that the UE does not support paging filtering, the UE does at least not provide the paging filtering information at block 1130.

FIG. 12 illustrates a flow chart of a method for controlling paging filtering behaviour of UEs according to some embodiments. The method is performed by the network. More specifically, the method may be performed by a base station such as the base station represented by the control apparatus 300 as described above with reference to FIG. 3. The base station may be a serving base station, or a gNB or a transmission/reception point (TRP) in a 5G system. Generally, the method may be performed at a core network function such as AMF.

The method 1200 starts with receiving an indication from a UE that the UE supports a multi USIM mode, at block 1210. The indication may be received from a UE with more than one USIM, i.e., a multi USIM. The UE supports that more than one of the multi USIM is active. For example, the UE may be represented by any one of the mobile communication devices 102, 104, 105 of the wireless communication system 100 as described above with reference to FIG. 1, or the communication device 200 as described above with reference to FIG. 2.

Alternatively or optionally, the indication received at block 1210 may indicate that the UE is in the multi USIM mode of operation, i.e., that more than one USIM is active, according to some embodiments. In other embodiments, also alternatively or optionally, the indication received at block 1210 may indicate that the UE supports paging filtering. The indication received from the UE may also indicate that the UE is unable to attend at least in part (i.e., fully or partly) one or more services with the network, according to some embodiments.

In some embodiments, the indication may be received at block 1210 as part of a message such as a registration request message. For example, the registration request message may correspond to the Registration Request as defined in clause 4.2.2.2.2 of 3GPP TS 23.502 version 16.6.0.

At block 1220, an indication is sent to the UE (i.e., the UE from which the indication has been received, at block 1210). The indication commands/configures the UE to provide paging filtering information. If commanded/configured, the UE provides the paging filtering information, for example, if the UE becomes unable to attend to services of the network (e.g., PLMN), when the UE is to leave the network (e.g., PLMN) or when the UE is busy at the time of receiving a paging message. In some embodiments, the indication commands/configures the UE to provide paging filtering information if applicable to the UE.

In some embodiments, the indication may be sent at block 1220 as part of a message such as a registration accept message. For example, the registration accept message may correspond to the Registration Accept as defined in clause 4.2.2.2.2 of 3GPP TS 23.502 version 16.6.0.

In some embodiments, the network sends the indication to command the UE to provide paging filtering information at block 1220 in response to determining whether to send the indication. The determination may be performed based on a policy. For example, in case of the AMF, the AMF determines whether the UE is required to provide paging filtering information if the UE supports paging filtering feature based on an AMF policy.

In other embodiments, if the network determines not to send the indication based on the policy in response to receiving the indication that the UE supports a multi USIM mode at block 1210, the network does not send the indication to the UE such that the UE is not commanded to provide paging filtering information. In this case, the UE relies on a paging cause code from the network to decide on whether to attend to paging or not. For example, the UE may rely on the cause code for paging in accordance with the enhancement of Rel-17, as described above.

At block 1230, paging filtering information is received from the UE. The paging filtering information is to configure or command the network to apply paging filtering. As a consequence, the network is triggered to page and prevents to trigger downlink data notifications for services of the network to the UE. The paging filtering information received from the UE may be indicative, for example, that the UE has become unable to attend to services of the network (e.g., PLMN), that the UE is to leave the network (e.g., PLMN) or that the UE has been busy at the time of receiving a paging message.

In some embodiments, the paging filtering information may be received at block 1230 as part of a message such as a registration request message or a service request message. For example, the registration request message may correspond to the Registration Request or Service Request.

As already mentioned above, the paging filtering information may be indicative, for example, that the UE is to leave the network (e.g., PLMN) or that the UE has been busy at the time of receiving a paging message. In some embodiments, the message received from the UE further comprises a corresponding indication such as a leave indication indicating that the UE is to leave the network (e.g., PLMN) or a busy indication indicating that the UE has been busy at the time of receiving a paging message.

In other embodiments of the method shown in FIG. 12, the network may apply paging filtering and prevent to trigger a downlink data notification to the UE in response to receiving paging filtering information from the UE, at block 1230. Further, the network may send to the UE an accept message indicating that the network applies paging filtering. For example, the accept message may correspond to the Registration Accept or Service Accept.

According to the method for controlling paging filtering behaviour of UEs as shown in FIG. 12, the paging filtering behaviour of UEs can be controlled in view of all services of the network (e.g., PLMN). In other embodiments, the paging filtering behaviour of UEs may be controlled for one or more services of the network. The indication sent at block 1220 further comprises information about the one or more services for which paging filtering behaviour is to be controlled. The UE is configured/commanded to provide the paging filtering information for the one or more services of the network. Also, the network applies the paging filtering for the one or more services.

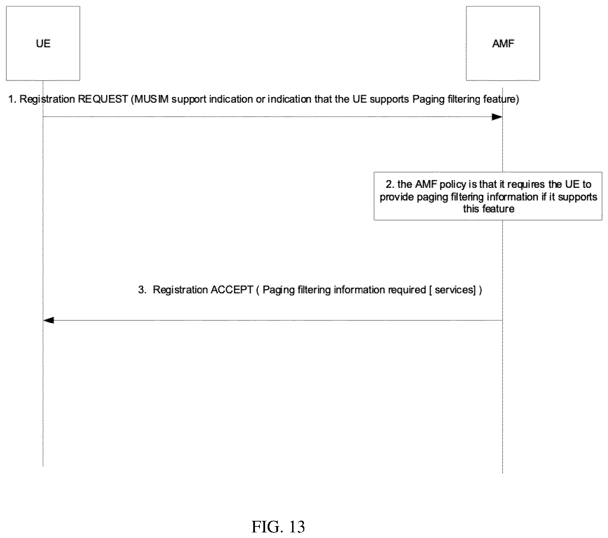

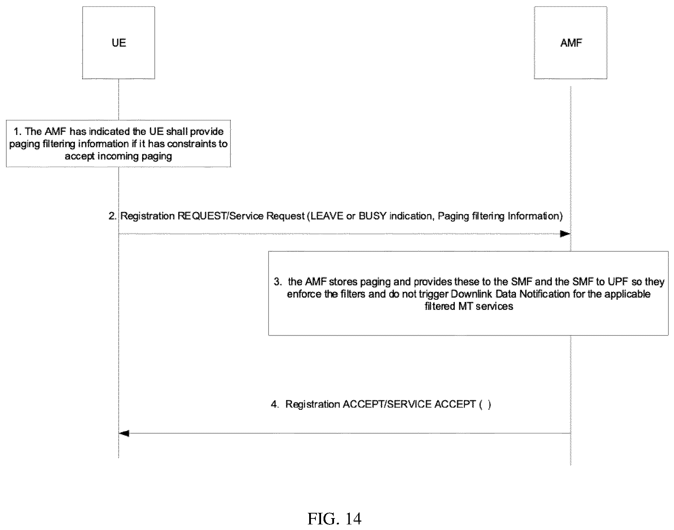

Examples of the subject disclosure will now be described with reference to the signaling flows shown in FIGS. 13 and 14.

The examples shown in FIGS. 13 and 14 relate to the implementation of the methods of the subject disclosure in the 5G system. In particular, the signaling flow between a UE supporting a multi USIM mode and 5G Core Access and Mobility Management Function (AMF).

FIG. 13 illustrates a first signaling flow for controlling paging filtering behaviour of UEs, according to some embodiments of the subject disclosure.

If the UE supports multi USIM mode or is in multi USIM mode of operation, the UE may send a registration request to the AMF (step 1). The registration request comprises an indication of multi USIM support (MUSIM support indication) or an indication that the UE supports the paging filtering feature or an indication that the UE is in multi USIM mode of operation. In response to receiving the registration request, the AMF may decide e.g. based on an AMF policy whether the UE is to be requested (if the UE supports the paging filtering feature) to provide paging filtering information (step 2). In response thereto, the AMF may send to the UE a registration accept (step 3). The registration accept may include an information element that indicates to the UE that the UE shall provide paging filtering information if applicable to the UE (i.e., an indication to command the UE to provide paging filtering information). In some embodiments, the AMF may indicate which service shall be requested to be filtered if more than one class of services can be filtered. That is, the registration accept may include information with regard to one or more services or one or more classes of services for which the UE shall provide paging filtering information. Once the UE received the registration accept and is configured/commanded to report paging filtering information. The UE reports paging filtering, for example, when the UE becomes unable to (fully or partly) attend to services in a PLMN, when the UE indicates to leave the PLMN or the UE is busy when receiving a paging message. The UE shall report any service the UE intends not to request the PLMN to trigger paging.

FIG. 14 illustrates a second signaling flow for controlling paging filtering behaviour of UEs, according to some embodiments of the subject disclosure.

The AMF has indicated that the UE shall provide paging filtering information if the UE has constraints to accept paging (step 1). In other words, the UE received the registration accept and is configured/commanded to report paging filtering information. For example, when the UE becomes unable to (fully or partly) attend to services in the PLMN, when the UE indicates to leave the PLMN or the UE is busy when receiving a paging message, the UE may send a registration request or service request to the AMF (step 2). The registration request or service request may include, for example, an indication that the UE is to leave the PLMN (LEAVE indication) or an indication that the UE has been busy when receiving a paging message (BUSY indication). Furthermore, the registration request or service request may include the paging filtering information. In response to receiving the registration request or service request with the paging filtering information, the AMF performs paging filtering (step 3). For example, the AMF may store paging information and provides the paging information to the SMF and the SMF to the UPF so that the SMF and/or the UPF enforce filters for paging. Also, downlink data notification is not triggered. For example, the downlink data notification is not triggered for filtered services (e.g., MT services). In response thereto, the AMF may send a registration accept or service accept.

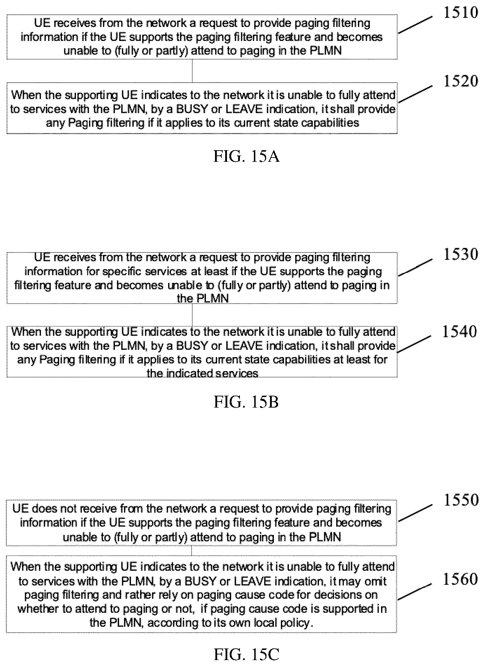

Further examples of the subject disclosure will now be described with reference to the methods shown in FIGS. 15A-15C. The examples shown in FIGS. 15A-15C relate to the implementation of the methods of the subject disclosure in the 5G system.

FIG. 15A illustrates a first example of the method for controlling paging filtering behaviour of UEs, according to some embodiments of the subject disclosure.

At block 1510, the UE may receive from the network a request to provide paging filtering information. For example, the UE may receive from the network an indication to command the UE to provide paging filtering information as described above with reference to FIG. 11. The request commands or configures the UE to provide paging filtering information if the UE supports the paging filtering feature and if the UE becomes unable to (fully or partly) attend to paging in the PLMN.

At block 1520, the UE may provide any paging filtering to the network when the UE indicates to the network that the UE is unable to (fully or partly) attend to one or more services with the PLMN, for example, by a BUSY or LEAVE indication. The UE may provide paging filtering if paging filtering applies to current state capabilities of the UE.

FIG. 15B illustrates a second example of the method for controlling paging filtering behaviour of UEs, according to some embodiments of the subject disclosure.

At block 1530, the UE may receive from the network a request to provide paging filtering information for specific services (i.e., for one or more services or for one or more classes of services). For example, the UE may receive from the network an indication to command the UE to provide paging filtering information for specific services as described above with reference to FIG. 11. The request commands or configures the UE to provide paging filtering information for the specific services if the UE supports the paging filtering feature and if the UE becomes unable to (fully or partly) attend to paging in the PLMN (e.g., paging with respect to the specific services).

At block 1540, the UE may provide any paging filtering to the network when the UE indicates to the network that the UE is unable to (fully or partly) attend to the specific services with the PLMN, for example, by a BUSY or LEAVE indication. The UE may provide paging filtering if paging filtering applies to current state capabilities at least for the specific services.

FIG. 15C illustrates a third example of the method for controlling paging filtering behaviour of UEs, according to some embodiments of the subject disclosure.

At block 1550, the UE does not receive from the network a request to provide paging filtering information if the UE supports the paging filtering feature and if the UE becomes unable to (fully or partly) attend to paging in the PLMN.

At block 1560, the UE may omit paging filtering and may rather rely on paging cause code for decisions on whether to attend to paging or not. The UE may rely on the paging cause code when the UE is unable to (fully or partly) attend to one or more services with the PLMN. When the UE is unable to (fully or partly) attend to one or more services with the PLMN, a BUSY or LEAVE indication may be sent to the network. Further, the UE may rely on the paging cause code if the paging cause code is supported in the PLM, according to the own local policy of the UE or the PLMN.

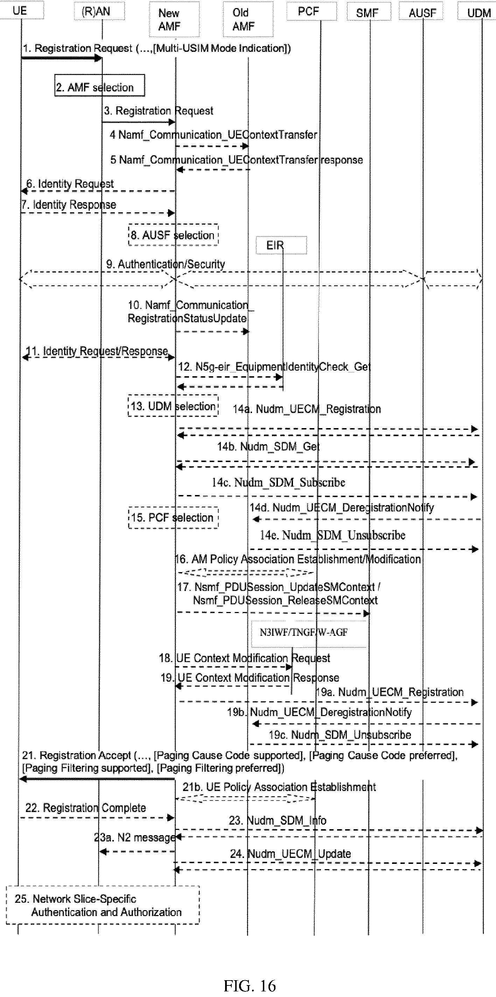

FIG. 16 illustrates the general registration call flow for 5G systems, implementing the methods for controlling Multi-USIM behaviour of UEs according to some embodiments of the subject disclosure. Details of the general registration call flow is described in clause 4.2.2.2.2 of 3GPP TS 23.502 version 16.6.0, which is incorporated herein by reference. The steps of FIG. 16 are described in detail in clause 4.2.2.2.2 of 3GPP TS 23.502 version 16.6.0.

In step 1 of FIG. 16, the Registration Request is sent from the UE to (R)AN. According to the subject disclosure, the Registration Request comprises an indication that the UE supports a multi USIM mode (i.e., Multi-USIM Mode Indication) in addition to the information described in clause 4.2.2.2.2 of 3GPP TS 23.502 version 16.6.0. That is, UE supporting Multi-USIM may include the Multi-USIM Mode Indication to the AMF if it has more than more USIM registered and intends to use Multi-USIM specific features.

In step 21 of FIG. 16, the Registration Accept is sent from new AMF to UE. According to the subject disclosure, the Registration Accept comprises indication whether the network supports the paging cause code feature by including "Paging Cause Code supported", whether the network supports and prefers the paging cause code feature by including "Paging Cause Code preferred", whether the network supports the paging filtering/restrictions by including "Paging Filtering/Restriction supported " or whether the network supports and prefers the paging filtering/restrictions by including "Paging Filtering/Restriction preferred", in addition to the information described in clause 4.2.2.2.2 of 3GPP TS 23.502 version 16.6.0. If the UE receives "Paging Cause Code preferred" indication, the UE assumes the network prefers the UE to use the paging cause code feature to determine whether or not to accept an incoming paging message. If the UE receives "Paging Filtering/Restriction preferred" indication, the UE shall request the network for a USIM to apply any necessary paging filtering/restrictions for PDU sessions or services it determines it cannot attend to on such USIM.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE and 5G NR, similar principles can be applied in relation to other networks and communication systems where clock synchronization, detection of spoofing and/or detection of inconsistency in timing is required. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic or any combination thereof. Some aspects of the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASICs), FPGA, gate level circuits and processors based on multi-core processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of the subject disclosure. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of the subject disclosure as defined in the appended claims. Indeed, there is a further embodiment comprising a combination of one or more embodiments with any of the other embodiments previously discussed.

## Claims

1. A user equipment, UE, comprising at least one processor, and at least one memory storing instructions that when executed by the at least one processor, cause the UE at least to perform:
sending, to a first network, a message comprising an indication that the UE supports a multi universal subscriber identity module, USIM, mode;
receiving, from the first network, a message comprising an indication that the first network supports paging filtering based on paging filtering information from the UE and that the paging filtering is preferred by the first network;
in response to receiving the indication that the first network supports the paging filtering based on the paging filtering information from the UE and that the paging filtering is preferred by the first network, deciding to send the paging filtering information to the first network to command the first network to apply the paging filtering, based at least on the UE being configured to support the paging filtering and one or more state capabilities of the UE; and
sending, to the first network, a message comprising the paging filtering information to command the first network to apply the paging filtering.

2. The UE of claim 1, wherein the instructions, when executed by the at least one processor, cause the UE at least to perform:
deciding to send the paging filtering information to the first network to command the first network to apply the paging filtering, despite the UE being configured to apply a paging response behaviour based on a paging cause code in a paging message received from the first network.

3. The UE of claim 1 or claim 2, wherein the instructions, when executed by the at least one processor, further cause the UE at least to perform:
receiving, from a second network, a message comprising an indication that the second network supports providing a paging cause code in a paging message to the UE.

4. The UE of claim 3, wherein the message comprising the indication that the first network supports the paging filtering based on the paging filtering information from the UE and that the paging filtering is preferred by the first network is a same message as the message comprising the indication that the second network supports providing the paging cause code in the paging message to the UE,
wherein the first network is a same network as the second network.

5. The UE of claim 3, wherein the message comprising the indication that the first network supports the paging filtering based on the paging filtering information from the UE and that the paging filtering is preferred by the first network is a different message from the message comprising the indication that the second network supports providing the paging cause code in the paging message to the UE,
wherein the message comprising the indication that the second network supports providing the paging cause code in the paging message to the UE is received after the UE has left the first network, and
wherein the first network is a different network from the second network.

6. The UE of claim 5, wherein the message comprising the indication that the second network supports providing the paging cause code in the paging message to the UE further indicates that providing the paging cause code in the paging message is preferred by the second network.

7. The UE of any one of claims 1 to 6, wherein the message comprising the indication that the UE supports the multi USIM mode further indicates that the UE is in the multi USIM mode.

8. The UE of any one of claims 1 to 7, wherein the message comprising the indication that the UE supports the multi USIM mode further indicates that the UE supports at least one of the paging filtering or a paging response behaviour based on a paging cause code in a paging message received from the first network.

9. The UE of any one of claims 1 to 8, wherein the message comprising the indication that the UE supports the multi USIM mode is a same message as the message comprising the paging filtering information to command the first network to apply the paging filtering.

10. The UE of any one of claims 1 to 8, wherein the message comprising the indication that the UE supports the multi USIM mode is a different message from the message comprising the paging filtering information to command the first network to apply the paging filtering.

11. The UE of claim 10, wherein the message comprising the paging filtering information to command the first network to apply the paging filtering is a service request message.

12. The UE of any one of claims 1 to 11, wherein the message comprising the indication that the UE supports the multi USIM mode is a registration request message, and the message comprising the indication that the first network supports the paging filtering based on the paging filtering information from the UE and that the paging filtering is preferred by the first network is a registration accept message.

13. A method of a user equipment, UE, the method comprising:
sending, to a first network, a message comprising an indication that the UE supports a multi universal subscriber identity module, USIM, mode;
receiving, from the first network, a message comprising an indication that the first network supports paging filtering based on paging filtering information from the UE and that the paging filtering is preferred by the first network;
in response to receiving the indication that the first network supports the paging filtering based on the paging filtering information from the UE and that the paging filtering is preferred by the first network, deciding to send the paging filtering information to the first network to command the first network to apply the paging filtering, based at least on the UE being configured to support the paging filtering and one or more state capabilities of the UE; and
sending, to the first network, a message comprising the paging filtering information to command the first network to apply the paging filtering.

14. The method of claim 13, wherein said deciding to send the paging filtering information to the first network to command the first network to apply the paging filtering is performed despite the UE being configured to apply a paging response behaviour based on a paging cause code in a paging message received from the first network.

15. The method of claim 13 or claim 14, further comprising:
receiving, from a second network, a message comprising an indication that the second network supports providing a paging cause code in a paging message to the UE.

16. The method of any one of claims 13 to 15, wherein the message comprising the indication that the UE supports the multi USIM mode is a same message as the message comprising the paging filtering information to command the first network to apply the paging filtering.

17. The method of any one of claims 13 to 15, wherein the message comprising the indication that the UE supports the multi USIM mode is a different message from the message comprising the paging filtering information to command the first network to apply the paging filtering.

18. The method of claim 17, wherein the message comprising the paging filtering information to command the first network to apply the paging filtering is a service request message.

19. The method of any one of claims 13 to 18, wherein the message comprising the indication that the UE supports the multi USIM mode is a registration request message, and the message comprising the indication that the first network supports the paging filtering based on the paging filtering information from the UE and that the paging filtering is preferred by the first network is a registration accept message.

20. An apparatus, comprising at least one processor, and at least one memory storing instructions that when executed by the at least one processor, cause the apparatus at least to perform:
receiving, from a user equipment, UE, a message comprising an indication that the UE supports a multi universal subscriber identity module, USIM, mode;
sending, to the UE, a message comprising an indication that a first network comprising the apparatus supports paging filtering based on paging filtering information from the UE and that the paging filtering is preferred by the first network; and
receiving, from the UE, a message comprising the paging filtering information to command the first network to apply the paging filtering,
wherein the message comprising the paging filtering information is based at least on the UE being configured to support the paging filtering and one or more state capabilities of the UE.
